(19) Europäisches Patentamt
European Patent Office
Office européen des brevets

(11) **EP 4 723 449 A1**

(12) **EUROPEAN PATENT APPLICATION**
published in accordance with Art. 153(4) EPC

(43) Date of publication:
**08.04.2026 Bulletin 2026/15**

(21) Application number: 25751653.4

(22) Date of filing: 07.02.2025

(51) International Patent Classification (IPC):
$H02K\ 33/18^{(2006.01)}$    $G03B\ 30/00^{(2021.01)}$
$H02K\ 41/02^{(2006.01)}$

(52) Cooperative Patent Classification (CPC):
G02B 7/04; G02B 7/18; G03B 13/34; G03B 30/00;
H02K 33/18; H02K 41/02; H04M 1/02; H04N 23/55;
H04N 23/57; H04N 23/67

(86) International application number:
**PCT/CN2025/076218**

(87) International publication number:
**WO 2025/168054 (14.08.2025 Gazette 2025/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 08.02.2024 CN 202410177064
28.02.2024 CN 202410223784
03.04.2024 CN 202410417502

(71) Applicant: Huawei Technologies Co., Ltd.
**Shenzhen, Guangdong 518129 (CN)**

(72) Inventors:
• **LU, Lei**
**Shenzhen, Guangdong 518129 (CN)**

• **LI, Zhilong**
**Shenzhen, Guangdong 518129 (CN)**
• **LIN, Huan**
**Shenzhen, Guangdong 518129 (CN)**
• **SONG, Baizhe**
**Shenzhen, Guangdong 518129 (CN)**
• **KUO, Li-Te**
**Shenzhen, Guangdong 518129 (CN)**
• **DING, Ruiming**
**Shenzhen, Guangdong 518129 (CN)**

(74) Representative: **Grünecker Patent- und
Rechtsanwälte
PartG mbB
Leopoldstraße 4
80802 München (DE)**

(54) **MOTOR, CAMERA MODULE, AND ELECTRONIC DEVICE**

(57) This application provides a motor, a camera module, and an electronic device. The motor includes a base, a carrier, n coils, and m groups of magnet units. Either the magnet units or the coils are fastened to the base, the others are fastened to the carrier, the carrier is used to mount a first optical element, n and m are integers greater than or equal to 2, and m is greater than n. The n coils are arranged in a first direction, the m groups of magnet units are arranged in the first direction, the magnet unit includes at least two polarity directions opposite to each other, the at least two polarity directions intersect with the first direction, and the n coils face the m groups of magnet units, to drive the carrier to move relative to the base in the first direction. A distance A between center lines of two adjacent coils in the first direction satisfies: nA=jk, where j is a positive integer, and k is a length of the magnet unit in the first direction. After the coils are en- ergized, the carrier may be driven to move in a long stroke relative to the base in the first direction.

FIG. 2

## Description

This application claims priorities to Chinese Patent Application No. 202410177064.2, filed with the China National Intellectual Property Administration on February 8, 2024 and entitled "MOTOR, CAMERA MODULE, AND ELECTRONIC DEVICE", to Chinese Patent Application No. 202410223784.8, filed with the China National Intellectual Property Administration on February 28, 2024 and entitled "MOTOR, CAMERA MODULE, AND ELECTRONIC DEVICE", and to Chinese Patent Application No. 202410417502.8, filed with the China National Intellectual Property Administration on April 3, 2024, and entitled "MOTOR, CAMERA MODULE, AND ELECTRONIC DEVICE", all of which are incorporated herein by reference in their entireties.

## TECHNICAL FIELD

This application relates to the field of camera device technologies, and in particular, to a motor, a camera module, and an electronic device.

## BACKGROUND

In recent years, with development of optical imaging technologies, people have increasingly higher requirements on a camera function of a portable electronic device. In addition to implementing functions such as background blurring and clear shooting at night, a camera module configured in the electronic device is required to implement telephoto shooting and macro shooting.

In a macro shooting mode, the camera module usually needs to shoot an image of a related object at a short distance. A shorter operating distance indicates a longer motor stroke occupied. For a camera module that has a telephoto shooting function currently configured in a mobile phone, because a stroke of a motor is short, a focusing distance may exceed a maximum stroke of the motor. Consequently, it may be difficult to focus during macro shooting, resulting in poor effect in macro shooting.

Based on this, providing a motor with a long stroke to meet use requirements of both telephoto shooting and macro shooting is an urgent technical problem that needs to be resolved.

## SUMMARY

This application provides a motor with a long stroke, a camera module, and an electronic device.

According to a first aspect, an embodiment of this application provides a motor. The motor includes a base, a carrier, n coils, and m groups of magnet units. Either the magnet units or the coils are fastened to the base, the others are fastened to the carrier, the carrier is used to mount a first optical element, n and m are integers greater than or equal to 2, and m is greater than n. The n coils are arranged in a first direction, the m groups of magnet units are arranged in the first direction, the magnet unit includes at least two polarity directions opposite to each other, the at least two polarity directions intersect with the first direction, and the n coils face the m groups of magnet units, to drive the carrier to move relative to the base in the first direction. A distance A between center lines of two adjacent coils in the first direction satisfies: nA=jk, where j is a positive integer, and k is a length of the magnet unit in the first direction.

It may be understood that, after being energized, the coils may move in the first direction under an action of a magnetic field of the m groups of magnet units, so that the coils can drive the carrier to move relative to the base in the first direction. nA=jk is set, and after the n coils translate by nA in the first direction, magnetic field strength and directions of the n coils can be the same at locations before and after the n coils move by nA. If magnitudes and directions of currents on the n coils at the locations before and after the n coils move may be set to be the same, magnitudes and directions of ampere forces on the n coils may also be the same. In other words, an alternating current with a period of nA may be applied to the n coils, so that when the n coils move in the first direction, under cooperation of the periodic alternating current and the magnetic field of the m groups of magnet units, the n coils may be continuously subjected to forces in one direction, so that the n coils can continuously move in the first direction, and the carrier can implement a long-stroke displacement relative to the base in the first direction.

n and m are integers greater than or equal to 2, and m is greater than n. The m groups of magnet units are arranged in the first direction, and a stroke of the motor depends on a length of the m groups of magnet units in the first direction. A plurality of groups of magnet units are disposed, so that a long-stroke displacement of the carrier in the first direction can be implemented. In addition, the plurality of coils are subjected to a plurality of ampere forces in the magnetic field. Compared with a solution in which one coil is used, the plurality of coils can drive a prism or a lens with a larger mass to move, or a quantity of coils is increased when a load remains unchanged, so that a moving speed of the carrier can be increased, to facilitate fast focusing of the camera module.

When the carrier needs to drive the first optical element to move in a direction of an optical axis of the camera module, the first direction may be set to a direction parallel to the optical axis. In this way, the coils can drive the carrier to move in the direction parallel to the optical axis of the camera module.

In some possible implementations, a length of the coil in the first direction is greater than 0.5k and less than k.

It may be understood that when the coil moves in the magnetic field, two straight sections on both sides of the coil are subjected to forces. The length of the coil in the first direction is greater than 0.5k. The two straight sections on both sides of the coil may be respectively located in ranges of two adjacent magnetic fields with opposite directions. When a forward current is applied to a first coil, forces on two straight sections on both sides of the coil may be in one direction. This avoids a case in which because magnetic field directions of the straight sections on both sides of the coil are the same, forces on the two straight sections are opposite, and cancel each other, and working efficiency of the coil is reduced. The length of the coil in the first direction is less than k, to avoid a case in which because the coil spans three or more magnetic fields, magnetic fields between the two straight sections on both sides of the coil do not work. The length of the coil in the first direction is less than k, and the first coil requires small disposing space. This helps reduce a volume of the motor.

In some possible implementations, a length of the m groups of magnet units in the first direction is greater than or equal to 9000 micrometers.

It may be understood that the length of the m groups of magnet units in the first direction is greater than or equal to 9000 micrometers, and a length of a magnetic field formed by the m groups of magnet units in the first direction may also be greater than or equal to 9000 micrometers. In a long magnetic field range, the n coils may drive the carrier to implement a long-stroke displacement relative to the base in the first direction.

In some possible implementations, the magnet unit includes a first magnet and a second magnet, the first magnet and the second magnet are arranged in the first direction, a polarity direction of the first magnet is opposite to a polarity direction of the second magnet, the polarity direction of the first magnet and the polarity direction of the second magnet both intersect with the first direction, and a sum of a length of the first magnet in the first direction and a length of the second magnet in the first direction is k.

Alternatively, the magnet unit includes a first magnet, a second magnet, and a third magnet, the first magnet, the second magnet, and the third magnet are arranged in the first direction, the third magnet is located between the first magnet and the second magnet, a polarity direction of the first magnet is opposite to a polarity direction of the second magnet, polarity directions of the first magnet, the second magnet, and the third magnet are different from each other and all intersect with the first direction, a sum of a length of the first magnet in the first direction, a length of the second magnet in the first direction, and a length of the third magnet in the first direction is k.

It may be understood that the polarity direction may be a direction from the north pole (N) to the south pole (S), or a direction from the south pole (S) to the north pole (N). One of the first magnet and the second magnet may have a north (N) polarity, and the other may have a south (S) polarity. The first magnet and the second magnet that are adjacent may form an NS magnetic field. The m groups of magnet units may include a plurality of continuous north-south magnetic fields, directions and strength of the magnetic fields may change periodically, and a change period is k. Two magnetic fields with opposite directions form a magnetic field period.

The first magnet, the second magnet, and the third magnet may form a Halbach magnet array. It may be understood that, compared with a magnet array 9 having only north-south pole magnets, the Halbach magnet array has stronger magnetic field strength near the magnets. When a current applied to the coil remains unchanged, the Halbach magnet array provides a stronger driving force for the coil than a common magnet array.

In some possible implementations, a length of the first magnet in the first direction is equal to a length of the second magnet in the first direction.

It may be understood that the magnetic field of the m groups of magnet units is distributed more evenly in the first direction. When the coil moves in a magnetic field after being energized, a period of a force on the coil may be k/2.

In some possible implementations, the n coils include a first coil, a magnetic field direction of the first coil at a first location is the same as a magnetic field direction of the first coil at a second location, and magnetic field strength of the first coil at the first location is the same as magnetic field strength of the first coil at the second location. A distance between the first location and the second location in the first direction is nA.

It may be understood that locations before and after the n coils move a distance of nA in the first direction are respectively the first location and the second location. The n coils include the first coil. The magnetic field direction of the first coil at the first location is the same as the magnetic field direction of the first coil at the second location. The magnetic field strength of the first coil at the first location is the same as the magnetic field strength of the first coil at the second location. When the n coils move in the first direction, currents of a same direction and magnitude may be applied at the first location and the second location. In this case, a force direction of the n coils at the first location is the same as a force direction of the n coils at the second location. For example, the force on the n coils at the first location is in a forward direction, and the force at the second location may also be in the forward direction. When the n coils move in the first direction, a current with a current period nA may be applied to the coils. Only a current direction in the period nA needs to be designed, so that a force on the n coils is always in a forward direction in the period nA, and the n coils can continuously move in the first direction. Return of the n coils can reverse the current, so that the forces on the coils are reversed, and the coils can drive the carrier backward.

In some possible implementations, the n coils include a first coil, and a current direction changes when the first coil moves a distance of 0.5k in the first direction.

It may be understood that a period of the magnetic fields formed by the m magnet units may be k, and one period k includes two magnetic fields with opposite directions. When the coils move in the first direction, and the first coil moves a distance of 0.5k in the first direction, a current direction changes. A current reversal interval matches a length of a magnetic field, so that a force on the coil in the magnetic field after each reversal is always in one direction.

In some possible implementations, a phase difference of currents applied to the n coils is 360°/n.

It may be understood that the n coils are located at different locations in the magnetic field of the m groups of magnet units at a moment, and magnetic field directions and strength at the locations of the n coils may also be different. The currents applied to the n coils may have a phase difference, so that when the n coils move in the first direction, the forces on the n coils are all in one direction.

A period of magnetic fields formed by the m magnet units may be k, and one period k includes two magnetic fields with opposite directions. A force period of the coils is 0.5k. In one force period of the coils, a phase difference of currents on the n coils is 360°/n, and the n coils may take turns to generate a force, so that in a process in which the n coils move in the first direction, forces on the n coils are even, and the carrier moves stably.

In some possible implementations, the n coils include a first-type coil and a second-type coil, the first-type coil is a coil with lowest magnetic field strength in the n coils at a moment at a location in which the n coils (3) are located, and the second-type coil is a coil other than the first-type coil in the n coils. The first-type coil is de-energized, and the second-type coil is energized.

It may be understood that, when magnitudes of the currents applied to the n coils remain unchanged, a coil located at a location with larger magnetic field strength is subjected to a larger force. A second-type coil that is subjected to a larger force is selected to be energized for working, and a first-type coil with lower working efficiency is de-energized. This helps reduce power consumption of the motor.

In some possible implementations, the n coils include a first coil, a second coil, and a third coil, and the first coil, the second coil, and the third coil are arranged in the first direction.

A ratio of a displacement of the first coil in the first direction during energization to that during de-energization is 2:1; and/or

 a ratio of a displacement of the second coil in the first direction during energization to that during de-energization is 2:1; and/or
 a ratio of a displacement of the third coil in the first direction during energization to that during de-energization is 2:1.

It may be understood that the n coils include the first coil, the second coil, and the third coil. At any moment, two coils are driven by forces to move the carrier. The first coil, the second coil, and the third coil take turns to be de-energized. In one force period, each coil is de-energized for 1/3 of a period length. In a moving process in the first direction, the n coils may still have a large force to drive the carrier to move.

In some possible implementations, the motor further includes an electrical connector. One end of the electrical connector is fastened to the base, the other end is fastened to the carrier, the electrical connector is electrically connected to the coils, and the electrical connector has a deformation capability.

It may be understood that, when the n coils drive the carrier to move in the first direction, the electrical connector may deform, so that the coils can be energized in a moving process. This avoids a case in which because the electrical connector falls off from the carrier due to an excessively long moving path of the carrier, a power outage between the electrical connector and a second circuit board is caused, the coils are de-energized, and working of the motor is affected.

In some possible implementations, a K value of the electrical connector is less than 10 mN/mm.

It may be understood that the K value of the electrical connector is set to a small range, so that when the carrier moves in the first direction, the electrical connector causes small obstruction to moving of the carrier, and power consumption of the motor is small.

In some possible implementations, the electrical connector includes a spiral structure or a zigzag structure.

It may be understood that the spiral structure or the zigzag structure may be used to extend a length of the electrical connector and reduce the K value of the electrical connector.

In some possible implementations, the electrical connector includes a spring.

Alternatively, the electrical connector includes a trace suspension assembly, one end of the trace suspension assembly is fastened to the base, the other end is fastened to the carrier and is electrically connected to the coils, and the trace suspension assembly is elastic.

It may be understood that both the spring and the trace suspension assembly may deform. When the n coils drive the carrier to move in the first direction, the electrical connector may deform, so that the coils can be energized in a moving process. This avoids a case in which because the electrical connector falls off from the carrier due to an excessively long moving path of the carrier, a power outage between the electrical connector and a second circuit board is caused, the coils are de-energized, and working of the motor is affected.

In some possible implementations, the carrier includes a first side panel and a second side panel, the first side panel and the second side panel are disposed at an included angle, the first optical element is mounted on a surface that is of the first side panel and that is away from the second side panel, the n coils are fastened to a surface that is of the second side panel and that is away from the first side panel, and the m groups of magnet units are fastened to the base.

It may be understood that the first side panel and the second side panel are disposed at an included angle, to form an oblique plane, so that space can be effectively used, and a volume of the camera module can be reduced.

In some possible implementations, the carrier further includes a first bump and a second bump, the first bump and the second bump are arranged in a second direction, the first side panel and the second side panel are connected between the first bump and the second bump, and the first direction intersects with the second direction. The first bump and the second bump are slidably connected to the base through guide rods.

It may be understood that, compared with a solution in which one side of the carrier is connected to a guide rod, in this solution, the first bump and the second bump are provided to connect to two sides of the first side panel and the second side panel, and the first bump and the second bump are slidably connected to the base through the guide rods. The first optical element is mounted on the first side panel, and locations at which the carrier is connected to the guide rods are on two sides of the first optical element and the coils. When the carrier drives the first optical element to move, forces are balanced and moving is stable. This reduces a shaking risk of the carrier.

In some possible implementations, the motor further includes a first guide rod and a second guide rod, the first guide rod and the second guide rod are fastened to the base and are spaced apart in a second direction, the first guide rod and the second guide rod are respectively located on two sides of the coils and are spaced apart from the coils, and the first direction intersects with the second direction. The carrier is slidably connected to the first guide rod and the second guide rod, and a length direction of the first guide rod and a length direction of the second guide rod are parallel to the first direction.

It may be understood that the length direction of the first guide rod and the length direction of the second guide rod are set to be parallel to the first direction, so that when the carrier moves in the first direction, the first guide rod and the second guide rod can provide support, and can further guide a moving direction of the carrier, to avoid misalignment of the carrier in a moving process and ensure that the carrier moves quickly and stably.

In some possible implementations, the base includes a bottom plate, a first bearing part, a second bearing part, a third bearing part, and a fourth bearing part, and the first bearing part, the second bearing part, the third bearing part, and the fourth bearing part 17 are fastened to a peripheral edge of the bottom plate. The first bearing part and the second bearing part are disposed opposite to each other and spaced apart in the first direction, the third bearing part and the fourth bearing part are disposed opposite to each other and spaced apart in the first direction, the first bearing part and the third bearing part are disposed opposite to each other and spaced apart in the second direction, and the second bearing part and the fourth bearing part are disposed opposite to each other and spaced apart in the second direction. Two ends of the first guide rod are respectively fastened to the first bearing part and the second bearing part, and two ends of the second guide rod are respectively fastened to the third bearing part and the fourth bearing part.

It may be understood that the bearing columns may be used to fasten the guide rods. The bearing columns are disposed opposite to each other on the bottom plate of the base, so that the length direction of the first guide rod and the length direction of the second guide rod can be parallel to the first direction.

In some possible implementations, a bottom surface of the carrier is provided with a first sliding groove and a second sliding groove, the first guide rod is slidably connected to the first sliding groove, and the second guide rod is slidably connected to the second sliding groove. The first sliding groove includes a "V"-shaped structure, and the second sliding groove includes a "U"-shaped structure.

It may be understood that the first sliding groove and the second sliding groove may be used as positioning structures of the first guide rod and the second guide rod, to facilitate quick positioning and mounting between the carrier and the first guide rod and the second guide rod. The first guide rod may be slidably connected to the "V"-shaped structure. The first guide rod and the "V"-shaped structure have two contact points in a Y-axis direction. In a process of assembling the carrier with the first guide rod and the second guide rod, the carrier can be quickly positioned in the Y-axis direction. When an actual product size of the first guide rod is slightly greater than a designed size due to a tolerance, the first guide rod can still be assembled in the "V"-shaped structure.

A groove width of the "U"-shaped structure may be greater than a width of the second guide rod. In this way, the carrier can be allowed to have a specific production error, and it is ensured that when a size of the carrier slightly increases or decreases due to the production error, the carrier can be successfully slidably connected to the first guide rod and the second guide rod. Setting the "U" structure can improve an error tolerance rate, and can save production costs.

In some possible implementations, there are two "V"-shaped structures and one "U"-shaped structure. The two "V"-shaped structures and the "U"-shaped structure are sequentially connected to form a triangle, and a projection of a center of the carrier on a plane on which the triangle is located coincides with the triangle.

It may be understood that a three-point connection is formed between the carrier, the first guide rod, and the second guide rod, so that a shaking risk of the carrier in a moving process can be reduced.

In some possible implementations, the motor further includes a first ball and a second ball, the first ball and the second ball are fastened to the carrier and spaced apart in a second direction, the first ball and the second ball are respectively located on two sides of the coils and are spaced apart from the coils, and the first direction intersects with the second direction. The first ball and the second ball are slidably connected to the base.

It may be understood that, compared with a solution in which a guide rod is used to implement a sliding connection between the carrier and the base, using the balls can reduce an area of a sliding connection, to help reduce friction resistance.

In some possible implementations, the motor further includes a tunnel magnetoresistance effect sensor and a magnetic grating, the tunnel magnetoresistance effect sensor is fastened to the carrier and is spaced apart from the coils, the magnetic gating is fastened to the base and is spaced apart from the magnet units, and the tunnel magnetoresistance effect sensor and the magnetic gating are disposed opposite to each other.

It may be understood that the TMR sensor may cooperate with the magnetic gating, to measure a displacement of the carrier when the carrier moves in the first direction. The TMR sensor has advantages of high precision, high sensitivity, low power consumption, small size, good temperature stability, and wide operating temperature range.

In some possible implementations, the motor further includes a magnetic sheet made of a metal material, the magnetic sheet is fastened to the carrier or the base, and is spaced apart from the coils, and the magnetic sheet is disposed opposite to the magnet units.

It may be understood that there is an attractive force between the magnetic sheet and the magnet units, and the carrier may be limited in a direction in which the magnetic sheet faces the magnet units, to reduce a shaking risk of the carrier.

In some possible implementations, the motor further includes a buffer member, the buffer member is fastened to the base, the buffer member and the carrier are disposed opposite to each other in the first direction, and the buffer member is flexible.

It may be understood that, when the carrier moves in the first direction or collides with the base in a reliability test, the buffer member 86 may absorb deformation impact energy, to reduce damage caused by collision impact to the carrier.

According to a second aspect, an embodiment of this application provides a camera module. The camera module includes a first optical element, a photosensitive element, and a motor. The photosensitive element is located on a light-exiting side of the first optical element, and the first optical element is mounted on a carrier of the motor. The motor of the camera module can implement a long-stroke displacement. The camera module has high imaging quality, to improve image shooting experience.

In some possible implementations, the first optical element is a prism, the camera module may further include a second optical element, and the second optical element may be located on the light-exiting side of the first optical element and located on a light-incident side of the photosensitive element.

It may be understood that the prism has a larger mass than a lens. The motor in this application has a large load bearing capability, and can carry the prism to move at a high speed. The camera module has a fast response speed, and user experience is good.

In some possible implementations, the camera module may further include a third optical element and a fourth optical element, the third optical element is located on a light-incident side of the prism, the fourth optical element is located on the light-incident side of the prism, and the third optical element and the fourth optical element are spaced apart in the first direction. The carrier of the motor drives the prism to move in the first direction, the prism is opposite to the third optical element at a first location, and the prism is opposite to the fourth optical element at a second location.

It may be understood that optical power of the third optical element may be different from optical power of the fourth optical element. When the prism is at the first location, the third optical element and the second optical element form a focusing lens group. When the prism is at the second location, the fourth optical element and the second optical element form another focusing lens group, and the two focusing lens groups may have different optical power. When the camera module has different focusing requirements, the motor may be used to control the prism to move in the first direction, and switch a focusing lens group, to satisfy the focusing requirements of the camera module. User experience is good.

According to a third aspect, an embodiment of this application provides an electronic device. The electronic device includes a housing and a camera module, and the camera module is mounted on the housing. Image shooting experience with the electronic device is good.

## BRIEF DESCRIPTION OF DRAWINGS

To describe the technical solutions in embodiments of this application, the following describes accompanying drawings used in embodiments of this application.

FIG. 1 is a diagram of a structure of an implementation of an electronic device according to an embodiment of this application;
FIG. 2 is a partial sectional view in an implementation of the electronic device shown in FIG. 1 along a line A-A;
FIG. 3 is a diagram of a structure of an implementation of a motor shown in FIG. 2;

FIG. 4 is an exploded diagram of an implementation of the motor shown in FIG. 3;

FIG. 5 is a diagram of a partial structure of an implementation of the motor shown in FIG. 3;

FIG. 6 is a diagram of the structure shown in FIG. 5 from another angle;

FIG. 7 is a diagram of a partial structure of an implementation of the motor shown in FIG. 3;

FIG. 8a is a diagram of a structure of an implementation of a magnet array shown in FIG. 7 from another angle;

FIG. 8b is a diagram of a structure of an implementation of the structure shown in FIG. 8a along a section line B-B;

FIG. 9 is a diagram of a structure of an implementation of a carrier shown in FIG. 3;

FIG. 10 is a diagram of a partial structure of the motor shown in FIG. 3 from another angle;

FIG. 11 is a diagram of a partial structure of an implementation of the motor shown in FIG. 3;

FIG. 12 is a diagram of a partial structure of an implementation of the motor shown in FIG. 3;

FIG. 13 is a diagram of a partial structure of the motor shown in FIG. 3 from another angle;

FIG. 14 is a partial sectional view of an implementation of the structure shown in FIG. 13 along a section line C-C;

FIG. 15 is an assembly diagram of an implementation of the structure shown in FIG. 14;

FIG. 16 is a diagram of a structure of an implementation of the structure shown in FIG. 15 along a section line D-D;

FIG. 17 is a diagram of an implementation of a magnitude and a direction of a force on a first coil shown in FIG. 15 when the first coil moves in a first direction without changing a current direction;

FIG. 18 is a diagram of an implementation of current and force statuses of the first coil shown in FIG. 16 when the first coil moves;

FIG. 19 to FIG. 26 are diagrams of implementations of relative locations of n coils and a magnet array at different moments;

FIG. 27 is a diagram of an implementation of energization of a first coil, a second coil, and a third coil in a moving process shown in FIG. 19 to FIG. 26;

FIG. 28 is a diagram of an implementation of a relationship between displacements and forces of n coils in an energization manner shown in FIG. 27;

FIG. 29 is a diagram of another implementation of energization of a first coil, a second coil, and a third coil in the moving process shown in FIG. 19 to FIG. 26;

FIG. 30 is a diagram of another implementation of a current applied to a coil;

FIG. 31 is a diagram of still another implementation of a current applied to a coil;

FIG. 32 is an assembly diagram of another implementation of coils and magnet units shown in FIG.

14;

FIG. 33 is an assembly diagram of still another implementation of coils and magnet units shown in FIG. 14;

FIG. 34 is an assembly diagram of yet another implementation of coils and magnet units shown in FIG. 14;

FIG. 35 is a diagram of a structure of another implementation of an electrical connector shown in FIG. 13;

FIG. 36a is a diagram of a structure of still another implementation of an electrical connector shown in FIG. 13;

FIG. 36b is a diagram of a partial structure of yet another implementation of an electrical connector 5 shown in FIG. 13;

FIG. 36c is a partial sectional view of an implementation of an extension part 53 shown in FIG. 36b along a section line J-J;

FIG. 37 is a partial sectional view of an implementation of the structure shown in FIG. 13 along a section line E-E;

FIG. 38 is a diagram of a partial structure of an implementation of the motor shown in FIG. 3 from another angle;

FIG. 39 is a sectional view of an implementation of the motor shown in FIG. 38 along a section line F-F;

FIG. 40 is a sectional view of an implementation of the motor shown in FIG. 38 along a section line G-G;

FIG. 41 is a sectional view of an implementation of the motor shown in FIG. 38 along a section line H-H;

FIG. 42 is a diagram of a structure of another implementation of the motor shown in FIG. 2;

FIG. 43 is an exploded diagram of an implementation of the motor shown in FIG. 41; and

FIG. 44 is a sectional view of an implementation of the motor shown in FIG. 42 along a section line I-I.

## DESCRIPTION OF EMBODIMENTS

For ease of understanding, the following first explains and describes English abbreviations and related technical terms used in embodiments of this application.

Lens group: The lens group is a component that uses a lens refraction principle to enable light rays of a scene to pass through the lens group to form a clear image on a focusing plane. One lens group may include one or more lenses. Herein, the lens may be a concave lens or a convex lens.

Optical axis: The optical axis is a direction of light rays transmitted by an optical system. Refer to a main light ray of a center field of view. For a symmetric transmission system, the optical axis usually coincides with a rotation center line of the optical system. For off-axis and reflective systems, the optical axis is also presented as a broken line.

Focus: Focus (focus) is also referred to as light alignment or convergence. Focusing is a process of changing locations of an object distance and an image distance by using a camera focusing mechanism, so that a photographed object is clearly imaged. Generally, a digital camera has a plurality of focusing modes: an auto focusing mode, a manual focusing mode, a multi-focus mode, or the like.

Auto focus (auto focus): The auto focus is a focusing mode in which reflected light is received by a sensor (for example, a charge-coupled device (charge-coupled device, CCD)) on a camera by using a principle of light reflection of an object, and is processed by a computer to drive an electric focusing apparatus to focus.

Macro shooting is to shoot an image of an object at a short shooting distance with high magnification, and is usually used to shoot an image of a very small object, such as a flower or an insect. In macro shooting, an image of a related object needs to be shot at a short distance. A shorter working distance indicates a longer motor stroke.

Halbach magnet: achieves stronger magnetic thrust performance by a combination of magnets in three directions, but a required overturning resisting moment also increases.

Trace suspension assembly (Trace Suspension Assembly, TSA): a component that integrates a spring and a signal line.

The following describes embodiments of this application with reference to the accompanying drawings in embodiments of this application. Embodiments described with reference to the accompanying drawings in this specification are examples, and are intended to explain this application, but cannot be understood as a limitation on this application.

In the descriptions of embodiments of this application, it should be noted that terms "installation" and "connection" should be understood in a broad sense unless there is a clear stipulation and limitation. For example, "connection" may be a detachable connection, a nondetachable connection, a direct connection, or an indirect connection through an intermediate medium. It should be understood that, in this application, an "electrical connection" may be understood as physical contact and electrical conduction of components. It may also be understood as a form in which different components in a line structure are connected through physical lines that can transmit an electrical signal, such as a printed circuit board (printed circuit board, PCB) copper foil or a conducting wire. Both "connected" and "connection" may refer to a mechanical connection relationship or a physical connection relationship. For example, A is connected to B or a connection between A and B may mean that there is a fastening component (for example, a screw, a bolt, or a nail) between A and B, or A and B are in contact with each other and A and B are difficult to be separated.

In addition, "fastening" in this specification should also be understood in a broad sense. For example, "fastening" may be direct fastening or indirect fastening through an intermediate medium. The term "fastening" means that two objects are connected to each other and a relative location relationship remains unchanged after the connection. The orientation terms mentioned in embodiments of this application, for example, "upper" and "lower", are merely directions with reference to the accompanying drawings. Therefore, the orientation terms are used to better and more clearly describe and understand embodiments of this application, rather than indicating or implying that an indicated apparatus or element needs to have a specific orientation or be constructed and operated in the specific orientation, and therefore cannot be construed as a limitation on embodiments of this application. "A plurality of" means two or more than two.

In the descriptions of embodiments of this application, unless otherwise specified, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in the descriptions of embodiments of this application, "a plurality of" means two or more.

In embodiments of this application, the terms "first", "second", "third", and "fourth" are merely intended for a purpose of description, and shall not be understood as an indication or implication of relative importance or an implicit indication of a quantity of indicated technical features. Therefore, a feature defined by "first", "second", "third", or "fourth" may explicitly or implicitly include one or more features.

In addition, limitations on relative location relationships, for example, being parallel, perpendicular, or aligned, are mentioned in embodiments of this application. These limitations are all defined based on a current technique level, but are not absolutely strict limitations. A small deviation is allowed, and being approximately parallel, approximately perpendicular, approximately aligned, or the like is allowed. For example, that A is parallel to B means that A is parallel or approximately parallel to B, and an included angle of 0 degrees to 10 degrees between A and B is allowed. For example, that A is perpendicular to B means that A is perpendicular or approximately perpendicular to B, and an included angle of 80 degrees to 100 degrees between A and B is allowed.

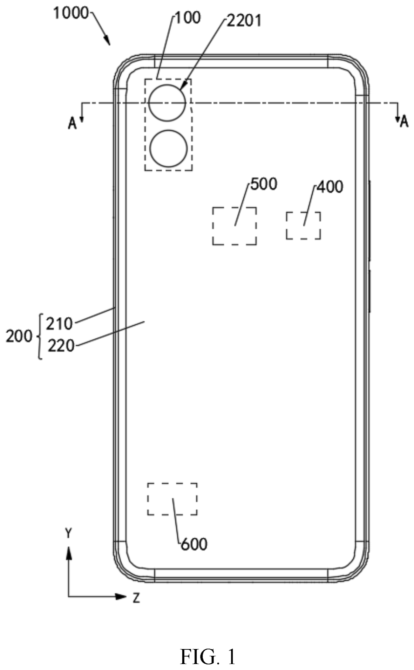

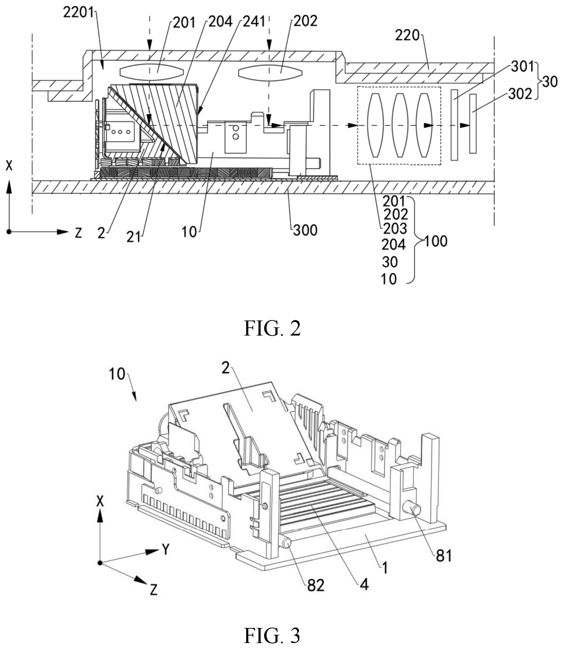

FIG. 1 is a diagram of a structure of an implementation of an electronic device 1000 according to an embodiment of this application. FIG. 2 is a partial sectional view in an implementation of the electronic device 1000 shown in FIG. 1 along a line A-A.

The electronic device 1000 may be a device with a camera function, such as a mobile phone, a tablet personal computer (tablet personal computer), a laptop computer (laptop computer), a personal digital assistant (personal digital assistant, PDA), a camera, a personal computer, a notebook computer, a vehicle-mounted device, a video surveillance device, a wearable device, augmented reality (augmented reality, AR) glasses, an AR helmet, virtual reality (virtual reality, VR) glasses, or a VR helmet. The electronic device 1000 in the embodiment shown in FIG. 1 is described by using the mobile phone as an example.

As shown in FIG. 1 and FIG. 2, the electronic device 1000 may include a camera module 100, a housing 200, and a screen 300. The camera module 100 may be a rear-facing camera module 100, or may be a front-facing camera module 100. In this application, an example in which the camera module 100 is the rear-facing camera module 100 is used for description. It should be noted that FIG. 1, FIG. 2, and related accompanying drawings in the following descriptions merely show some components included in the electronic device 1000 as an example. Actual shapes, actual sizes, actual locations, and actual structures of the components are not limited by FIG. 1, FIG. 2, or the accompanying drawings in the following descriptions. In another embodiment, when the electronic device 1000 is a device in another form, the electronic device 1000 may not include the screen 300.

For ease of description, a thickness direction of the electronic device 1000 is defined as an X-axis, a length direction of the electronic device 1000 is a Y-axis, and a width direction of the electronic device 1000 is a Z-axis. It may be understood that a coordinate system of the electronic device 1000 may be flexibly set according to a specific actual requirement.

In this implementation, the housing 200 may include a frame 210 and a rear cover 220. The rear cover 220 is fastened to the frame 210. For example, the rear cover 220 may be fastened to the frame 210 by adhesive. The rear cover 220 and the frame 210 may alternatively be of an integrally formed structure. In other words, the rear cover 220 and the frame 210 are of an integral structure.

In addition, the screen 300 may be located on a side that is of the frame 210 and that is away from the rear cover 220. In this case, the screen 300 and the rear cover 220 are respectively located on two sides of the frame 210. The screen 300, the frame 210, and the rear cover 220 jointly enclose an interior of the electronic device 1000. The interior of the electronic device 1000 may be configured to place a component of the electronic device 1000, for example, a battery, a receiver, or a microphone.

In some implementations, the screen 300 may be configured to display an image and the like. The screen 300 may be a flat screen or a curved screen. A display of the screen 300 may be an organic light-emitting diode (organic light-emitting diode, OLED) display, an active-matrix organic light-emitting diode (active-matrix organic light-emitting diode, AMOLED) display, a liquid crystal display (liquid crystal display, LCD), or the like.

In some implementations, the electronic device 1000 may further include an image processor 400. The image processor 400 may be located in the electronic device 1000. The image processor 400 and the camera module 100 are in a communication connection, and the image processor 400 is configured to obtain image data from the camera module 100 and process the image data. The communication connection between the camera module 100 and the image processor 400 may be for data transmission implemented through an electrical connection like cabling, or data transmission implemented through coupling. It may be understood that the communication connection between the camera module 100 and the image processor 400 may alternatively be implemented in another manner in which data transmission can be implemented.

The image processor 400 may perform optimization processing on a digital image signal, and transmit a processed signal to the screen 300. The image processor 400 may be an image processing chip or a digital signal processing chip. The image processor 400 is configured to quickly and timely transfer data obtained by a photosensitive chip to a central processing unit and refresh the photosensitive chip. Therefore, quality of the image processor directly affects picture quality (for example, color saturation and definition).

In some implementations, the electronic device 1000 may further include an analog-to-digital converter 500. The analog-to-digital converter 500 is connected between the camera module 100 and the image processor 400. The analog-to-digital converter 500 is configured to: convert, into a digital image signal, a signal generated by the camera module 100 and transmit the digital image signal to the image processor 400.

In some implementations, the electronic device 1000 may include a memory 600. The memory 600 and the image processor 400 are in a communication connection. After processing a digital image signal, the image processor 400 transmits an image to the memory 600, so that when the image needs to be viewed subsequently, the image can be searched for in the memory 600 at any time and displayed on the screen 300. In some implementations, the image processor 400 further compresses the processed digital image signal, and then stores a compressed signal in the memory 600, to save space of the memory 600.

For example, the camera module 100 may be located in the interior of the electronic device 1000. The camera module 100 may be fastened to a side that is of the screen 300 and that faces the rear cover 220. The rear cover 220 may be provided with a light transmission hole 2201. A shape of the light transmission hole 2201 is not limited to a circle shown in FIG. 1. The light transmission hole 2201 communicates the interior of the electronic device 1000 with the exterior of the electronic device 1000. Light in the exterior of the electronic device 1000 may enter the interior of the electronic device 1000 through the light transmission hole 2201. The camera module 100 may collect ambient light that enters the interior of the electronic device 1000.

The image processor 400, the analog-to-digital converter 500, and the memory 600 may also be located in the interior of the electronic device 1000. In FIG. 1, the image processor 400, the analog-to-digital converter 500, and the memory 600 are schematically shown by using dashed boxes.

In some implementations, the rear cover 220 may include a light transmission lens, and the light transmission lens is mounted in the light transmission hole 2201, to allow light to pass through, and implement dust proofing and water proofing.

It may be understood that a mounting location of the camera module 100 of the electronic device 1000 in the embodiment shown in FIG. 1 is merely an example, and the mounting location of the camera module 100 is not strictly limited in this application. In some other embodiments, the camera module 100 may alternatively be mounted at another location of the electronic device 1000. For example, the camera module 100 may be mounted in the upper middle or the upper right corner of a back surface of the electronic device 1000. In some other embodiments, the electronic device 1000 may include a terminal body and an auxiliary component that can rotate, move, or disassemble relative to the terminal body; and the camera module 100 may alternatively be disposed on the auxiliary component. In addition, sizes, quantities, locations, and the like of the image processor 400, the analog-to-digital converter 500, and the memory 600 shown in FIG. 1 are merely examples, and may be adjusted according to a requirement. This is not limited in this application.

As shown in FIG. 2, the camera module 100 may include a motor 10, a first optical element 204, and a photosensitive component 30. The photosensitive component 30 may be located on a light-exiting side of the first optical element 204. Light can pass through the first optical element 204 to reach a photosensitive surface of the photosensitive component 30. The photosensitive component 30 may be configured to convert an optical image into an electrical signal, that is, an analog image signal, and transmit the electrical signal to the analog-to-digital converter 500, so that the analog-to-digital converter 500 converts the electrical signal into a digital image signal and sends the digital image signal to the image processor 400. The motor 10 may be configured to drive the first optical element 204 to move.

In some implementations, the camera module 100 may be a periscope camera module 100 (in other words, an optical axis direction of the camera module 100 is any direction on a Y-Z plane). In this way, the camera module 100 has a low height in an X-axis direction, and the camera module 100 is better applicable to the thin electronic device 1000. In another implementation, the camera module 100 may alternatively be a vertical camera module 100 (in other words, the optical axis direction of the camera module 100 may be parallel to the X-axis direction).

In some implementations, the camera module 100 may further include a second optical element 203. The second optical element 203 may be located on the light-exiting side of the first optical element 204 and located on a light-incident side of the photosensitive element 302. For example, the first optical element 204 may be a prism. The second optical element 203 may be a lens group.

In some implementations, the camera module 100 may further include a second optical element 203. The first optical element 204 may be a lens group (not shown in the figure). The second optical element 203 may be a lens group. The second optical element 203 is located on the light-exiting side of the first optical element 204 and located on the light-incident side of the photosensitive element 302. The motor 10 may be configured to drive the lens group to move, to implement focusing of the camera module 100.

In some implementations, the camera module 100 may further include a second optical element 203, a third optical element 201, and a fourth optical element 202. The second optical element 203, the third optical element 201, and the fourth optical element 202 may all be lens groups. The first optical element 204 is a prism (as shown in FIG. 2). Both the third optical element 201 and the fourth optical element 202 are located on a light-incident side of the prism, and the second optical element 203 is located on the light-exiting side of the first optical element 204. The prism may be used to change a direction of an optical axis. For example, the prism may change the direction of the optical axis from a direction parallel to the X-axis to a direction parallel to the Z-axis.

For example, the third optical element 201 and the fourth optical element 202 may be spaced apart in a first direction. Optical power of the third optical element 201 may be different from optical power of the fourth optical element 202. The motor 10 may drive the prism to move in the first direction, so that the prism may be opposite to the third optical element 201 at a first location, and the prism may be opposite to the fourth optical element 202 at a second location. In this way, the third optical element 201 and the second optical element 203 form a focusing lens group, the fourth optical element 202 and the second optical element 203 form another focusing lens group, and the two focusing lens groups have different optical power. When the camera module 100 has different focusing requirements, the motor 10 may control the prism to move in a Z-axis direction, and switch a focusing lens group, to satisfy the focusing requirements of the camera module 100. The accompanying drawings of embodiments of this specification are described by using an example in which the first optical element 204 is a prism.

In some implementations, a mass of the prism may be greater than or equal to 2000 mg. A moving displacement of the prism may be greater than or equal to 9000 micrometers. When the moving displacement of the prism is greater than or equal to 9000 micrometers, time for the motor 10 to drive the prism may be less than or equal to 60 milliseconds. In this way, in some implementations, the camera module 100 may include two motors 10, and the two motors 10 are respectively configured to drive the first optical element 204 and the second optical element 203 to move in the Z-axis direction.

For example, the photosensitive component 30 may include a light filter 301 and a photosensitive element 302. The photosensitive element 302 is located on an image side of the light filter 301. Light can sequentially pass through the first optical element 204 and the light filter 301 to reach a photosensitive surface of the photosensitive element 302. The photosensitive surface of the photosensitive element 302 is also a photosensitive surface of the photosensitive component 30. The photosensitive element 302 may be located on a light-exiting side of the second optical element 203.

The photosensitive element 302 may be configured to convert an optical signal into an electrical signal. The photosensitive element 302 (also referred to as an image sensor) may be a semiconductor chip, includes hundreds of thousands to millions of photodiodes on a surface, and generates charges when being irradiated by light. The photosensitive element 302 may be a charge-coupled device (charge-coupled device, CCD), or may be a complementary metal-oxide semiconductor (complementary metal-oxide semiconductor, CMOS) device. The charge-coupled device is made of a highly photosensitive semiconductor material, and can convert rays into electric charges. The charge-coupled device includes many photosensitive units, usually in megapixels. When the surface of the charge-coupled device is illuminated by rays, each photosensitive unit reflects electric charges on a component. Signals generated by all photosensitive units are combined to form a complete picture. The complementary metal-oxide semiconductor device is a semiconductor mainly made by using two elements: silicon and germanium, so that semiconductors of N (with negative electrons) and P (with positive electrons) levels coexist on the complementary metal-oxide semiconductor device. A current generated by these two complementary effects can be recorded and interpreted into an image by a processing chip.

The light filter 301 may be configured to: filter out an undesired band in the rays, and prevent the photosensitive element 302 from generating false colors or ripples, to improve effective resolution and color reproduction of the photosensitive element 302. For example, the light filter 301 may be an infrared light filter 301. In some other implementations, the camera module 100 may alternatively remove a separate mechanical part, the light filter 301, and implement a light filtering function by performing surface processing or material processing on some optical elements (for example, the second optical element 203, the third optical element 201, or the fourth optical element 202). A specific embodiment of a mechanical part or structure configured to implement light filtering is not strictly limited in this application.

The foregoing specifically describes structures of the electronic device 1000 and the camera module 100. The following specifically describes several implementations of the motor 10 with reference to related accompanying drawings. It may be understood that, in the following accompanying drawings, for simplified illustration, when the accompanying drawings include a same structure, the structure may be numbered in some accompanying drawings and not numbered in some accompanying drawings, or the structure may be numbered in all of the accompanying drawings.

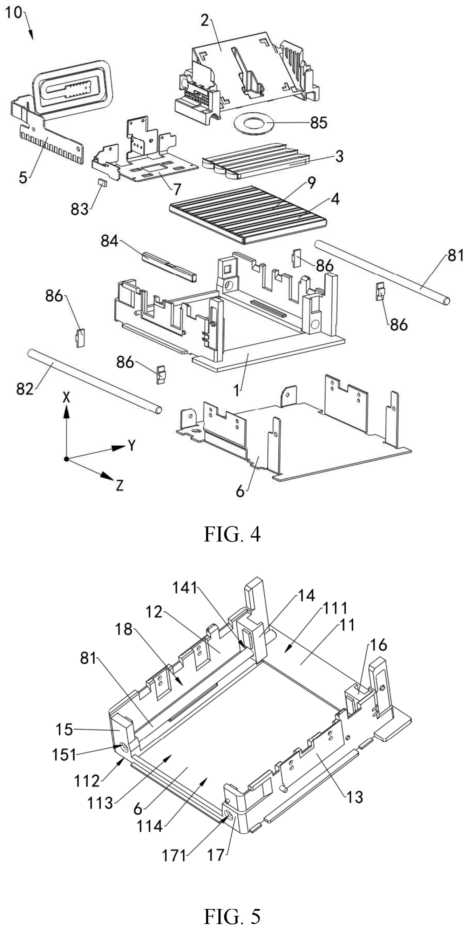

FIG. 3 is a diagram of a structure of an implementation of the motor 10 shown in FIG. 2. FIG. 4 is an exploded diagram of an implementation of the motor 10 shown in FIG. 3.

As shown in FIG. 3 and FIG. 4, the motor 10 may include a base 1, a carrier 2, n coils 3, m groups of magnet units 4, an electrical connector 5, a first circuit board 6, a second circuit board 7, a first guide rod 81, a second guide rod 82, a tunnel magnetoresistance effect sensor 83, a magnetic gating 84, a magnetic sheet 85, and a buffer member 86. n and m are integers greater than or equal to 2, and m is greater than n. In the accompanying drawings of this application, an example in which there are three coils 3 is used (that is, n=3).

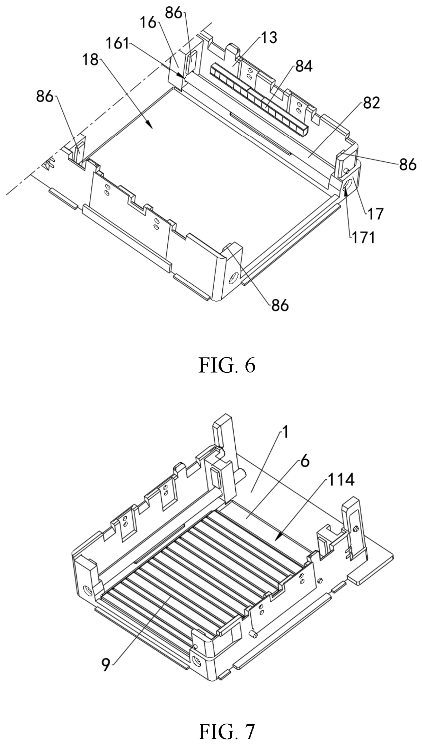

FIG. 5 is a diagram of a partial structure of an implementation of the motor 10 shown in FIG. 3. FIG. 6 is a diagram of the structure shown in FIG. 5 from another angle.

As shown in FIG. 5 and FIG. 6, the base 1 may include a bottom plate 11, a first side wall 12, a second side wall 13, a first bearing part 14, a second bearing part 15, a third bearing part 16, and a fourth bearing part 17. The first side wall 12, the second side wall 13, the first bearing part 14, the second bearing part 15, the third bearing part 16, and the fourth bearing part 17 may be fastened to a peripheral edge of the bottom plate 11.

In some implementations, the bottom plate 11 may include a top surface 111 and a bottom surface 112 that are disposed opposite to each other. The first circuit board 6 may be fastened to the bottom surface 112 of the bottom plate 11. In some implementations, the bottom plate 11 may be provided with a through hole 113, and the through hole 113 penetrates the top surface 111 and the bottom surface 112 of the bottom plate 11. The first circuit board 6 may be fastened to the bottom surface 112 of the bottom plate 11. The first circuit board 6 and a wall surface of the through hole 113 may enclose a mounting slot 114.

In some implementations, the first circuit board 6 may be a printed circuit board (Printed circuit board, PCB).

In some implementations, for example, the first bearing part 14 and the second bearing part 15 may be disposed opposite to each other and spaced apart in the first direction. The third bearing part 16 and the fourth bearing part 17 may be disposed opposite to each other and spaced apart in the first direction. The first bearing part 14 and the third bearing part 16 may be disposed opposite to each other and spaced apart in a second direction. The second bearing part 15 and the fourth bearing part 17 may be disposed opposite to each other and spaced apart in the second direction.

For example, the first direction may be parallel to the Z-axis direction. The second direction may be parallel to a Y-axis direction.

The first guide rod 81 and the second guide rod 82 may be fastened to the base 1 and are spaced apart in the second direction. A length direction of the first guide rod 81 and a length direction of the second guide rod 82 may be parallel to the first direction. For example, two ends of the first guide rod 81 may be respectively fastened to the first bearing part 14 and the second bearing part 15. Two ends of the second guide rod 82 may be respectively fastened to the third bearing part 16 and the fourth bearing part 17. For example, the first bearing part 14 may be provided with a first through hole 141. The second bearing part 15 may be provided with a second through hole 151. The third bearing part 16 may be provided with a third through hole 161. The fourth bearing part 17 may be provided with a fourth through hole 171. Two ends of the first guide rod 81 are respectively fastened in the first through hole 141 and the second through hole 151. Two ends of the second guide rod 82 are respectively fastened in the third through hole 161 and the fourth through hole 171.

In some implementations, there may be four buffer members 86. The four buffer members 86 may be respectively fastened to surfaces that are of the first bearing part 14, the second bearing part 15, the third bearing part 16, and the fourth bearing part 17 and that face a moving space 18.

The first side wall 12 and the second side wall 13 may be spaced apart on the bottom plate 11 in the second direction. For example, the first side wall 12 may be connected between the first bearing part 14 and the second bearing part 15. The second side wall 13 may be connected between the third bearing part 16 and the fourth bearing part 17. The bottom plate 11, the first side wall 12, and the second side wall 13 may jointly enclose the moving space 18.

In some implementations, the magnetic gating 84 may be fastened to a side that is of the first side wall 12 or the second side wall 13 and that faces the moving space 18. For example, the magnetic gating 84 may be fastened to the second side wall 13. In another implementation, the magnetic gating 84 may alternatively be fastened to the top surface 111 of the bottom plate 11.

In some implementations, the magnetic gating 84 may include a plurality of magnets with an N (north) polarity direction and a plurality of magnets with an S (south) polarity direction. The plurality of N-pole magnets and the plurality of S-pole magnets are alternately arranged in the first direction in sequence, to form a magnetic field that periodically changes.

In some implementations, the base 1 may be an integrated mechanical part. Integrating two components into an integral structure by using an integral molding process means that, in a process of forming one of the two components, the component is connected to the other component, and the two components are connected without secondary processing (for example, adhesive bonding, welding, snap-fit connections, or screw connection). For example, the bottom plate 11, the first side wall 12, the second side wall 13, the first bearing part 14, the second bearing part 15, the third bearing part 16, and the fourth bearing part 17 may be integrally formed by an injection molding process.

FIG. 7 is a diagram of a partial structure of an implementation of the motor 10 shown in FIG. 3.

As shown in FIG. 7, the m groups of magnet units 4 may be fastened to the base 1. For example, the m groups of magnet units 4 may be fastened to the first circuit board 6, and are located in the mounting slot 114. In this way, a height of the camera module 100 in the X-axis direction can be reduced. The m groups of magnet units 4 are arranged in the first direction, and may form a magnet array 9.

In another implementation, the m groups of magnet units may alternatively be fastened to the first side wall 12 or the second side wall 13 of the base 1.

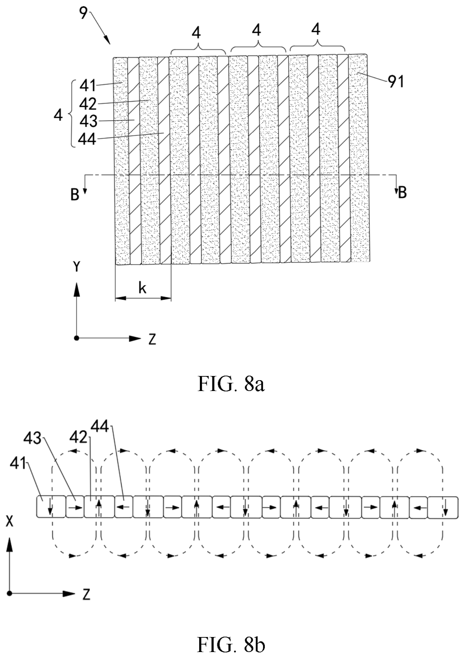

FIG. 8a is a diagram of a partial structure of an implementation of the magnet array 9 shown in FIG. 7 from another angle. FIG. 8b is a diagram of a structure of an implementation of the structure shown in FIG. 8a along a section line B-B.

As shown in FIG. 8a and FIG. 8b, the m groups of magnet units 4 are arranged in the first direction. The magnet unit 4 may include at least two polarity directions opposite to each other, and the at least two polarity directions intersect with the first direction. It may be understood that the polarity direction may be a direction from the north pole (N) to the south pole (S), or a direction from the south pole (S) to the north pole (N).

A length of the magnet unit 4 in the first direction is k. For example, the magnet unit 4 may include one or more magnets.

In some implementations, the magnet unit 4 may include a first magnet 41 and a second magnet 42. The first magnet 41 and the second magnet 42 may be arranged in the first direction, and a polarity direction of the first magnet 41 may be opposite to a polarity direction of the second magnet 42. One of the first magnet 41 and the second magnet 42 may have a north (N) polarity, and the other may have a south (S) polarity. Both the polarity direction of the first magnet 41 and the polarity direction of the second magnet 42 may intersect with the first direction. A sum of a length of the first magnet 41 in the first direction and a length of the second magnet 42 in the first direction is k.

It may be understood that an arrangement direction of the first magnet 41 and the second magnet 42 may not be completely parallel to an arrangement direction of the m groups of magnet units 4. There may be a small included angle between the arrangement direction of the first magnet 41 and the second magnet 42 and the arrangement direction of the m groups of magnet units 4, and the included angle may be less than or equal to 10°. For example, the included angle may be 2°, 3°, 5°, or 8°.

In some implementations, the magnet unit 4 may include a first magnet 41, a second magnet 42, and a third magnet 43. The first magnet 41, the second magnet 42, and the third magnet 43 may be arranged in the first direction. The third magnet 43 may be located between the first magnet 41 and the second magnet 42. A polarity direction of the first magnet 41 may be opposite to a polarity direction of the second magnet 42. The polarity direction of the first magnet 41, the polarity direction of the second magnet 42, and a polarity direction of the third magnet 43 are different from each other, and all intersect with the first direction. A sum of a length of the first magnet 41 in the first direction, a length of the second magnet 42 in the first direction, and a length of the third magnet 43 in the first direction is k.

In this way, the first magnet 41, the second magnet 42, and the third magnet 43 may form a Halbach magnet array. It may be understood that, compared with the magnet array 9 having only north-south pole magnets, the Halbach magnet array has stronger magnetic field strength near the magnets.

In some implementations, the magnet unit 4 may further include a fourth magnet 44. The first magnet 41, the second magnet 42, the third magnet 43, and the fourth magnet 44 may be arranged in the first direction. The fourth magnet 44 is located on a side that is of the second magnet 42 and that is away from the first magnet 41. A polarity direction of the fourth magnet 44 is different from the polarity direction of the first magnet 41, the polarity direction of the second magnet 42, and the polarity direction of the third magnet 43. The polarity direction of the fourth magnet 44 intersects with the first direction. A sum of the length of the first magnet 41 in the first direction, the length of the second magnet 42 in the first direction, the length of the third magnet 43 in the first direction, and a length of the fourth magnet 44 in the first direction is k.

It may be understood that the fourth magnet 44 is disposed, so that the fourth magnet 44 and first magnets 41 and second magnets 42 in two adjacent magnet units 4 can form a Halbach magnet array, to further enhance magnetic field strength near the m groups of magnet units 4.

As shown in FIG. 8a and FIG. 8b, a first magnet 41 and a second magnet 42 in a group of magnet unit 4 form an NS magnetic field, and further form an NS magnetic field with an adjacent magnet unit 4. In this way, a plurality of NS magnetic fields arranged in the first direction form a magnetic field of the m groups of magnet units 4.

In some implementations, the length of the first magnet 41 in the first direction may be equal to the length of the second magnet 42 in the first direction. For example, the length of the first magnet 41 in the first direction may be 0.5k. In this way, the magnetic field of the m groups of magnet units 4 is distributed more evenly in the first direction.

In some implementations, the length of the third magnet 43 in the first direction may be equal to the length of the fourth magnet 44 in the first direction.

In some implementations, when the magnet unit 4 further includes the fourth magnet 44, the motor 10 may further include a supplementary magnet 91. The supplementary magnet 91 and the m groups of magnet units 4 are arranged in the first direction, to form the magnet array 9. The supplementary magnet 91 is located on one side of the m groups of magnet units 4, and is adjacent to the fourth magnet 44. A magnetic field direction of the supplementary magnet 91 may be the same as a magnetic field direction of the first magnet 41. In this way, the supplementary magnet 91 can form a Halbach magnet array with the second magnet 42 and the fourth magnet 44 in the adjacent magnet unit 4. It may be understood that the length of the magnetic field in the first direction may be further prolonged by disposing the supplementary magnet 91, and a fourth magnet 44 in the last group of magnet unit 4 is effectively used.

For example, the m groups of magnet units 4 may include four groups of magnet units 4. It may be understood that a length of the m groups of magnet units 4 in the first direction may be designed as required. For example, the length of the m groups of magnet units 4 in the first direction may be greater than or equal to 9000 micrometers (micrometer, $\mu$m).

In another implementation, the magnet unit 4 may also include one magnet, and the magnet includes two parts with opposite polarity directions. A length of the magnet in the first direction is k.

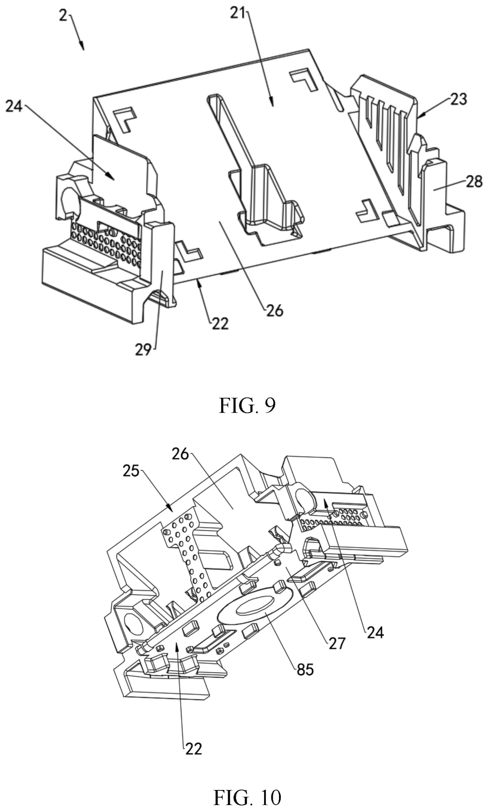

FIG. 9 is a diagram of a structure of an implementation of the carrier 2 shown in FIG. 3. FIG. 10 is a diagram of a partial structure of the motor 10 shown in FIG. 3 from another angle.

As shown in FIG. 2, FIG. 9, and FIG. 10, the carrier 2 may be used to mount the first optical element 204. The carrier 2 includes a bearing surface 21, a bottom surface 22, a first side surface 23, a second side surface 24, and a back surface 25. The bearing surface 21, the bottom surface 112, and the back surface 25 are all connected between the first side surface 23 and the second side surface 24. The bearing surface 21 is connected to the bottom surface 22 and the back surface 25. The bottom surface 112 is connected to the back surface 25. The bearing surface 21 may be disposed opposite to the bottom surface 22, and the first optical element 204 may be fastened to the bearing surface 21.

It may be understood that a shape of the carrier 2 may be designed according to a shape of the first optical element 204. For example, when the first optical element 204 is a prism, the bearing surface 21 may be an oblique surface to match a shape of the prism. A surface that is of the prism and that reflects light may be fastened to the bearing surface 21.

For example, the carrier 2 may include a first side panel 26 and a second side panel 27, and the first side panel 26 and the second side panel 27 are disposed at an included angle. The prism may be mounted on a surface that is of the first side panel 26 and that is away from the second side panel 27. The surface that is of the first side panel 26 and that is far away from the second side panel 27 may be the bearing surface 21 of the carrier 2. A surface that is of the second side panel 27 and that is away from the first side panel 26 may be a part of the bottom surface 22 of the carrier 2. It may be understood that, compared with a solution in which the carrier 2 is completely located on one side of the prism and does not overlap the prism in the first direction, in this implementation, the first side panel 26 and the second side panel 27 are disposed at an included angle to form an oblique surface, so as to match the shape of the prism, so that space can be effectively used and a volume of the camera module 100 can be reduced. In addition, a connection area with the prism may also be set to be large, and stability of a connection between the prism and the carrier 2 is also good.

In some implementations, the carrier 2 further includes a first bump 28 and a second bump 29, the first bump 28 and the second bump 29 are arranged in the second direction, and the first side panel 26 and the second side panel 27 are connected between the first bump 28 and the second bump 29. The first bump 28 and the second bump 29 may be slidably connected to the base 1 through guide rods. A surface that is of the first bump 28 and that faces the bottom plate 11 and a surface that is of the second bump 29 and that faces the bottom plate 11 may be parts of the bottom surface 22 of the carrier 2. A surface that is of the first bump 28 and that is away from the second bump 29 may be the first side surface 23 of the carrier 2, and a surface that is of the second bump 29 and that is away from the first bump 28 may be the second side surface 24 of the carrier 2. It may be understood that, compared with a solution in which one side of the carrier 2 is connected to the guide rod, in the technical solution of this implementation, the first bump 28 and the second bump 29 are connected to two sides of the first side panel 26 and the second side panel 27, and are slidably connected to the base 1 through the guide rods. The prism is mounted on the first side panel 26, and locations at which the carrier 2 is connected to the guide rods are on two sides of the prism. When the carrier 2 drives the prism to move, forces are balanced and moving is stable. This reduces a shaking risk of the carrier 2.

In some implementations, the magnetic sheet 85 may be fastened to the bottom surface 22 of the carrier 2. The magnetic sheet 85 may be made of a metal material. For example, the magnetic sheet 85 may be fastened to the surface on the side that is of the second side panel 27 and that is away from the first side panel 26.

In another implementation, when the first optical element 204 is a lens group, the carrier 2 may be used to mount the lens group. The lens group may be fastened to the bearing surface 21. In this case, a shape of the carrier 2 may be designed based on a specific shape of the lens group. Shapes of the carrier 2 shown in FIG. 9 and FIG. 10 are not limited in this application.

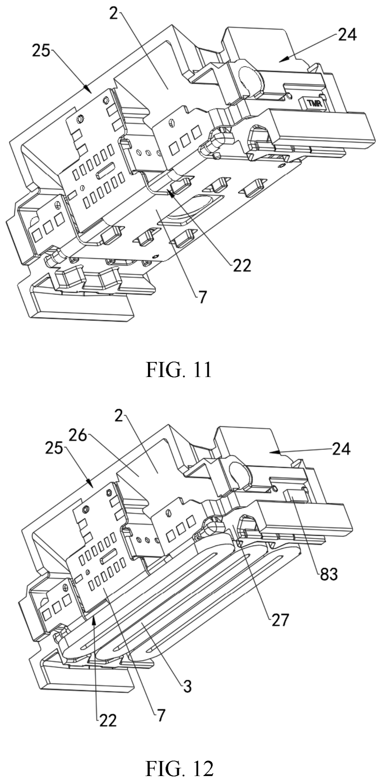

FIG. 11 is a diagram of a partial structure of an implementation of the motor 10 shown in FIG. 3. FIG. 12 is a diagram of a partial structure of an implementation of the motor 10 shown in FIG. 3.

As shown in FIG. 11 and FIG. 12, the n coils 3 may be fastened to the bottom surface 22 of the carrier 2. For example, the n coils 3 may be fastened to a surface that is of the second side panel 27 and that is away from the first side panel 26. The tunnel magnetoresistance effect (tunneling magnetoresistance effect, TMR) sensor 83 may be fastened to the second side surface 24 of the carrier 2.

The second circuit board 7 may be fastened to the carrier 2, and is electrically connected to the n coils 3 and the TMR sensor 83. The second circuit board 7 may be configured to supply power to the n coils 3 and the TMR sensor 83. For example, the second circuit board 7 may be partially connected to the bottom surface 22 of the carrier 2, partially connected to the back surface 25 of the carrier 2, and partially connected to the second side surface 24 of the carrier 2.

In some implementations, the second circuit board 7 may be a flexible circuit board or a rigid-flex circuit board.

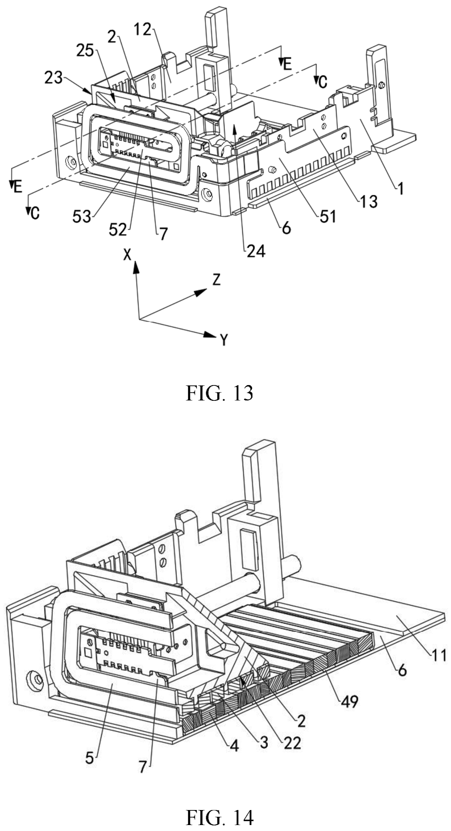

FIG. 13 is a diagram of a partial structure of the motor 10 shown in FIG. 3 from another angle. FIG. 14 is a partial sectional view of an implementation of the structure shown in FIG. 13 along a section line C-C.

As shown in FIG. 13 and FIG. 14, one end of the electrical connector 5 may be fastened to the base 1 and electrically connected to the first circuit board 6, and the other end may be fastened to the carrier 2 and electrically connected to the second circuit board 7. The electrical connector 5 may be electrically connected to the coils 3 and the TMR sensor 83 through the second circuit board 7.

The coils 3 may be fastened to the carrier 2. The m groups of magnet units 4 may be fastened to the base 1. The n coils 3 are disposed facing the m groups of magnet units 4. A plane on which a wire of the coil 3 is wound is a winding plane of the coil 3. That the n coils 3 are disposed facing the m groups of magnet units 4 means that a winding plane of the coils 3 faces the m groups of magnet units 4. For example, the n coils 3 may be fastened to the bottom surface 22 of the carrier 2, and the m groups of magnet units 4 may be fastened to the bottom plate 11 of the base 1.

In some implementations, the motor 10 may further include a magnet housing 49, and the magnet housing 49 may be fastened to the base 1. The m groups of magnet units 4 are mounted in the magnet housing 49. In this way, when the m groups of magnet units are mounted, the m groups of magnet units 4 may be first mounted in the magnet housing 49 to form an entirety, and then the entirety is mounted on the base 1.

In another implementation, the n coils 3 may alternatively be fastened to the first side surface 23 or the second side surface 24 of the carrier 2. Correspondingly, the m groups of magnet units 4 may alternatively be fastened to the first side wall 12 or the second side wall 13 of the base 1, so that the n coils 3 are disposed facing the m groups of magnet units 4.

In another implementation, the motor 10 may include 2n coils and 2m groups of magnet units. The n coils 3 may be fastened to the first side surface 23 of the carrier 2, and the m groups of magnet units are fastened to the first side wall 12 of the base 1, and face the coils 3 fastened to the first side surface 23. The n coils 3 may be fastened to the second side surface 24 of the carrier 2, and the m groups of magnet units are fastened to the second side wall 13 of the base 1, and face the coils 3 fastened to the second side surface 24.

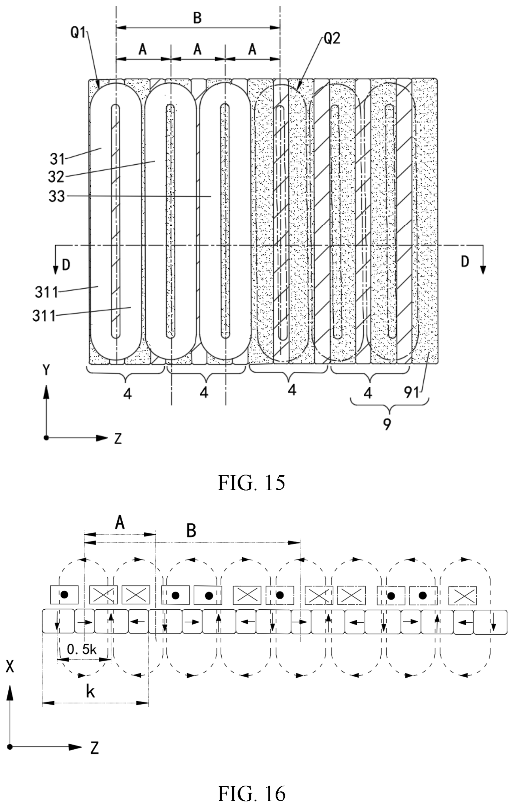

FIG. 15 is an assembly diagram of an implementation of the structure shown in FIG. 14. FIG. 16 is a diagram of a structure of an implementation of the structure shown in FIG. 15 along a section line D-D. The following describes, with reference to the accompanying drawings, moving of the n coils 3 under an action of a magnetic field after the n coils 3 are energized. For ease of description and understanding, in FIG. 15, dashed lines indicate locations of the n coils 3 after the n coils 3 move a distance of B in the first direction. In FIG. 16, arrows indicate polarity directions of the first magnet 41, the second magnet 42, the third magnet 43, and the fourth magnet 44. Arrows and curves indicate approximate distribution and directions of magnetic field lines. According to the dot-and-cross convention in physics, a current direction in the coil 3 is represented by using "·" and "x". "·" indicates that a direction of the current is perpendicular to the cross section and outward, and "x" indicates that a direction of the current is perpendicular to the cross section and inward.

As shown in FIG. 15 and FIG. 16, the n coils 3 may include a first coil 31, a second coil 32, and a third coil 33. The first coil 31, the second coil 32, and the third coil 33 are spaced and insulated in the first direction. The magnet array 9 includes the four groups of magnet units 4 and the supplementary magnet 91. The magnet unit 4 may include a first magnet 41, a second magnet 42, a third magnet 43, and a fourth magnet 44.

The m groups of magnet units 4 form a magnetic field whose magnitude and direction periodically change in the first direction. For example, a change period of the magnetic field may be k, and k is a length of the magnet unit 4 in the first direction. The direction of the magnetic field changes every 0.5k.

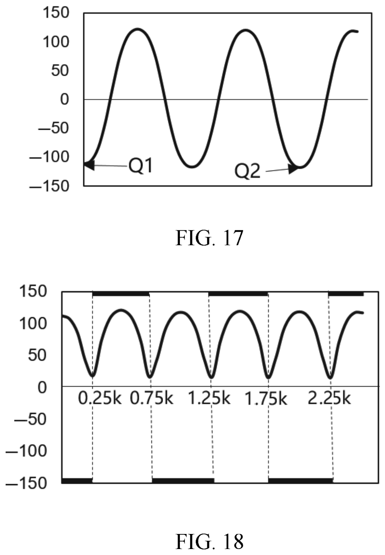

FIG. 17 is a diagram of an implementation of a magnitude and a direction of a force on the first coil 31 shown in FIG. 15 when the first coil 31 moves in the first direction without changing a current direction. It may be understood that, in a coordinate system, a horizontal coordinate represents a displacement of the first coil 31 in the first direction, and the displacement of the first coil 31 may be a distance between a location of the first coil 31 in the first direction and an initial location. The initial location of the first coil 31 is a location of the first coil 31 before the first coil 31 is energized. A vertical coordinate represents a magnitude and a direction of a force on the first coil 31. Positive or negative of the vertical coordinate represents the direction of the force, and an absolute value of the vertical coordinate represents the magnitude of force.

As shown in FIG. 15 to FIG. 17, when a current direction does not change, a magnitude and a direction of a force on the first coil 31 periodically change with the displacement when the first coil 31 moves in the first direction. A force period may be k, and k is the length of the magnet unit 4 in the first direction. An interval between two direction changes of the force is 0.5k. It may be understood that, according to analysis in FIG. 17, it can be learned that a current direction may change, so that a force on the n coils after the n coils are energized is always positive or negative. That is, the force on the n coils 3 is always in one direction. For example, an alternating current may be applied to the n coils 3, and a current direction of the alternating current changes with the displacement of the n coils 3 in the first direction. In this way, a current direction on the coils 3 may change in cooperation with a magnetic field direction, so that the force on the coils 3 in the magnetic field is always in one direction. After the alternating current is applied to the n coils, the n coils may move in the first direction in cooperation with the magnetic field of the m groups of magnet units 4, to drive the carrier 2 to move relative to the base 1 in the first direction.

It may be understood that, when the carrier 2 needs to drive the first optical element 204 to move in a direction of an optical axis of the camera module 100, the first direction may be set to parallel to the optical axis. In this way, the coils 3 can drive the carrier 2 to move in the direction parallel to the optical axis of the camera module 100. It may be understood that the carrier 2 moves in the first direction in two directions: forward and backward. The carrier 2 moves forward, and a distance between a light-exiting surface 241 (as shown in FIG. 2) of the prism carried on the carrier 2 and an imaging surface is decreased. The carrier 2 moves backward, and a distance between the light-exiting surface 241 of the prism carried on the carrier 2 and the imaging surface is increased.

As shown in FIG. 17, when a direction of a current applied to the first coil 31 remains unchanged, a force direction of the first coil 31 in this case may reflect a magnetic field strength and direction at a location of the first coil 31. It may be understood that the first coil 31 is affected by NS magnetic fields formed by a plurality of magnet units 4 in the m groups of magnet units 4, and the magnetic field strength and direction at the location of the first coil 31 indicate a total magnetic field strength and direction under an action of the plurality of magnetic fields. A force on the first coil 31 also indicates a resultant force under an action of the plurality of NS magnetic fields.

When the n coils 3 move in the first direction after being energized, the n coils 3 cut magnetic lines in the magnetic field of the m groups of magnet units 4, and the n coils 3 may be subjected to an ampere force. In a moving process of the n coils 3, a direction of the ampere force on the n coils 3 is jointly affected by the current direction in the first coil 31 and a magnetic field direction at the location of the first coil 31 at the moment. To enable the ampere force on the coils 3 to be in a predetermined direction, current directions of the n coils 3 may be adjusted at corresponding locations based on magnetic field distribution at different locations in a moving process of the coil 3 in the first direction.

The following uses the first coil 31 as an example to describe cooperation between the current and the magnetic field when the n coils 3 move. It may be understood that FIG. 17 and FIG. 18 both show some displacements and force statuses of the first coils 31 in the magnetic field.

FIG. 18 is a diagram of an implementation of current and force statuses of the first coil 31 shown in FIG. 16 when the first coil 31 moves. In a coordinate system, a horizontal coordinate represents a displacement of the first coil 31. A horizontal line represents a current on the first coil 31, positive or negative of a vertical coordinate represents a direction of the current on the first coil 31, and an absolute value of the vertical coordinate represents a magnitude of the current on the first coil 31. A curve represents a force on the first coil 31, positive or negative of the vertical coordinate represents a force direction of the first coil 31, and an absolute value of the vertical coordinate represents a magnitude of the force on the first coil 31.

As shown in FIG. 17 and FIG. 18, when a direction of a magnetic field at a location of the first coil 31 is negative, a reverse current is correspondingly applied to the first coil 31, so that a direction of the force on the first coil 31 is forward. When a direction of a magnetic field at a location of the first coil 31 is positive, a forward current is correspondingly applied to the first coil 31, so that a direction of the force on the first coil 31 is forward.

It may be understood that, in a moving process of the first coil 31, a current whose direction changes with the displacement is applied to the first coil 31, so that an ampere force on the first coil 31 remains a positive value. In this case, a direction of the ampere force may be the forward direction of the carrier 2. In this way, a current direction of the first coil 31 may be changed, so that the force on the first coil 31 is in the forward direction. In another implementation, the current direction of the first coil 31 may be changed, so that an ampere force on the first coil 31 is a negative value, and the force on the first coil 31 is in a backward direction.

For example, the current direction changes when the first coil 31 moves a distance of 0.5k in the first direction. It may be understood that the magnetic field of the m groups of magnet units 4 changes a direction in the first direction every 0.5k, and the current also changes a direction when moving a distance of 0.5k. The current direction may match a variation pattern of the magnetic field direction, so that the force on the first coil 31 remains in a same direction.

Energization manners and force statuses of the second coil 32 and the third coil 33 when the second coil 32 and the third coil 33 move in the magnet array 9 may be similar to those of the first coil 31. Directions of ampere forces on the second coil 32 and the third coil 33 may be in one direction by adjusting current directions of the second coil 32 and the third coil 33. It may be understood that, at a same moment, ampere forces on the first coil 31, the second coil 32, and the third coil 33 are in a same direction. In this way, in a process in which the first coil 31, the second coil 32, and the third coil 33 drive the carrier 2 to move, ampere forces on the first coil 31, the second coil 32, and the third coil 33 do not offset each other, and efficiency of the motor 10 is high.

As shown in FIG. 15, a distance A between center lines of two adjacent coils 3 in the first direction satisfies nA=jk, where j is a positive integer. The center line of the coil 3 is parallel to a winding plane of the coil 3 and is perpendicular to the first direction. It may be understood that nA=jk is set. That is, nA is an integer multiple of a length of the magnet unit 4 in the first direction. The m groups of magnet units 4 form a magnetic field whose magnitude and direction periodically change in the first direction. A change period of the magnetic field may be k. After the n coils 3 translate by nA in the first direction, magnetic field strength and directions of the n coils 3 can be the same at locations before and after the n coils 3 move by nA. If magnitudes and directions of currents on the n coils 3 at the locations before and after the n coils 3 move may be set to be the same, magnitudes and directions of ampere forces on the n coils 3 may also be the same. An alternating current with a period of nA may be applied to the n coils 3, so that when the n coils 3 move in the first direction, the n coils 3 can continuously move in the first direction under cooperation of the alternating current with the period of nA and the magnetic field of the m groups of magnet units 4. In addition, when the alternating current is designed, only a direction of a current of a length in one period of nA needs to be designed, rather than a current of the n coils 3 of all distances at which the n coils 3 moves in the first direction, so that design difficulty can be reduced.

For example, the n coils 3 include the first coil 31, the second coil 32, and the third coil 33, and n=3. In FIG. 15, the first coil 31, the second coil 32, and the third coil 33 at a first moment are represented by using solid lines. In FIG. 15, the first coil 31, the second coil 32, and the third coil 33 at a second moment are represented by using dashed lines. In the first direction, a distance B between a first location Q1 and a second location Q2 is 3A=2k.

As shown in FIG. 15 to FIG. 17, a magnetic field direction of the first coil 31 at the first location Q1 is the same as a magnetic field direction at the second location Q2. Magnetic field strength of the first coil 31 at the first location Q1 is the same as magnetic field strength at the second location Q2. In this way, at the first location Q1 and the second location Q2, magnitudes and directions of the current on the first coil 31 may be set to be the same, and magnitudes and directions of ampere forces on the first coil 31 may also be the same. In a moving process of the first coil 31, the magnitude and the direction of the current on the first coil 31 may change with the displacement, and a period of the current on the first coil 31 may be equal to the length k of one group of magnet unit 4. In this way, applying a periodic current to the first coil 31 helps the first coil 31 to implement long-distance movement.

In some implementations, a length of the m groups of magnet units 4 in the first direction may be greater than or equal to 9000 micrometers (micrometer, $\mu$m). In this way, the n coils 3 can drive the carrier 2 to move a long distance relative to the base 1 in the first direction.

In some implementations, a length of a coil 3 in the first direction is greater than 0.5k and less than k. It may be understood that the first coil 31 is used as an example, and as shown in FIG. 16, when the first coil 31 moves in a magnetic field, two straight sections 311 on both sides of the first coil 31 are subjected to forces. A length of the first coil 31 in the first direction is greater than 0.5k. The two straight sections 311 on both sides of the first coil 31 may be respectively located in ranges of two adjacent magnetic fields. When a forward current is applied to the first coil 31, the straight section 311 on the left side of the first coil 31 may be subjected to a force directed toward the right under an action of the first magnetic field. The straight section 311 on the left side of the first coil 31 may also be subjected to a force directed toward the right under an action of the second magnetic field. This avoids a case in which because magnetic field directions of the straight sections 311 on both sides of the first coil 31 are the same, forces on the two straight sections 311 are opposite, and cancel each other, and working efficiency of the first coil 31 is reduced. The length of the first coil 31 in the first direction is less than k, to avoid a case in which because the first coil 31 spans three or more magnetic fields, magnetic fields between the two straight sections 311 on both sides of the first coil 31 do not work. The length of the first coil 31 in the first direction is less than k, and the first coil 31 requires small disposing space. This helps reduce a volume of the motor.

It may be understood that the n coils 3 are located at different locations in the magnetic field of the m groups of magnet units 4 at a moment, and magnetic field directions and strength at the locations of the n coils 3 may also be different. The current applied to the n coils 3 may have a phase difference, so that when the n coils move in the first direction, the forces on the n coils are all in one direction.

With reference to the accompanying drawings, the following describes energization statuses and force statuses of the n coils 3 when the n coils 3 and the m groups of magnet units move in the first direction.

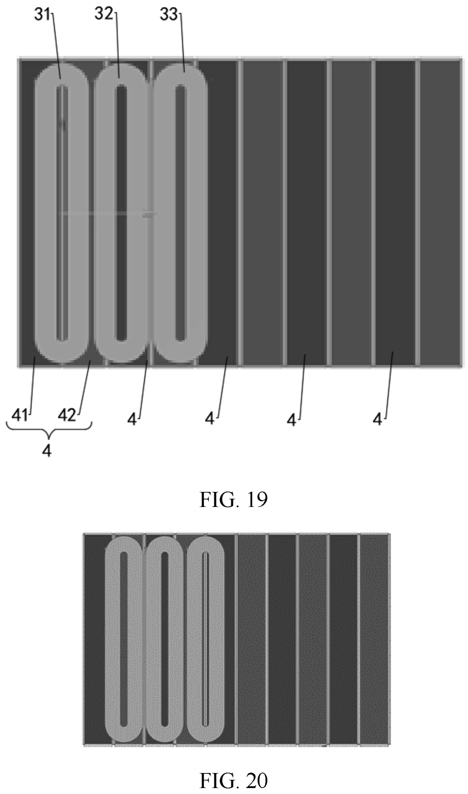

FIG. 19 to FIG. 26 are diagrams of relative locations of the n coils 3 and an implementation of the magnet array 9 at different moments. The n coils 3 include the first coil 31, the second coil 32, and the third coil 33. The magnet array 9 includes five groups of magnet units 4. The magnet unit 4 includes a first magnet 41 and a second magnet 42. It may be understood that FIG. 19 to FIG. 26 show a same structure. For simplicity, the structures are marked in FIG. 19, and are not marked in FIG. 20 to FIG. 26.

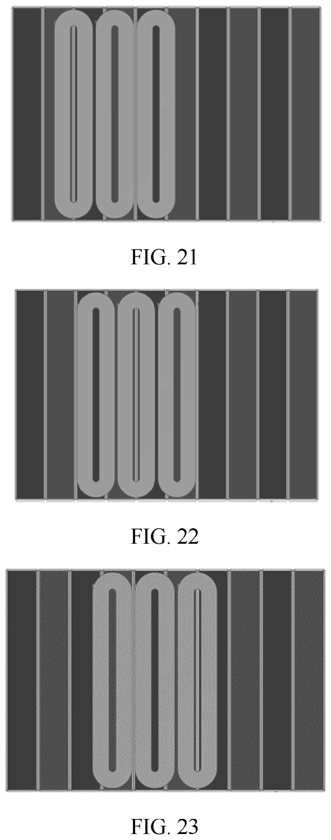

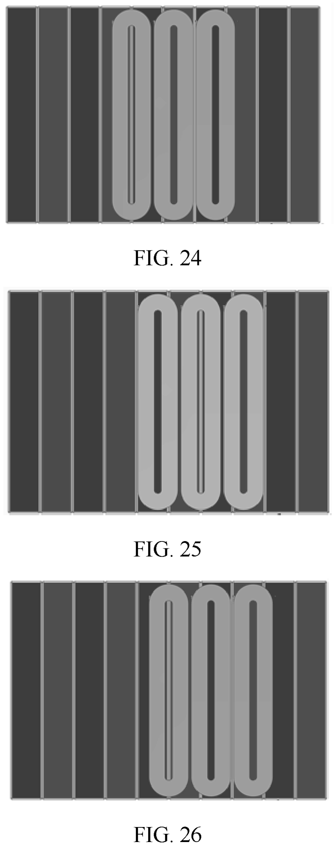

As shown in FIG. 19 to FIG. 26, from locations shown in FIG. 19 to locations shown in FIG. 20, the n coils 3 move 0.25A in the first direction. From the locations shown in FIG. 20 to locations shown in FIG. 21, the n coils 3 move 0.5A in the first direction. From the locations shown in FIG. 21 to locations shown in FIG. 22, the n coils 3 move 0.5A in the first direction. From the locations shown in FIG. 22 to locations shown in FIG. 23, the n coils 3 move 0.5A in the first direction. From the locations shown in FIG. 23 to locations shown in FIG. 24, the n coils 3 move 0.5A in the first direction. From the locations shown in FIG. 24 to locations shown in FIG. 25, the n coils 3 move 0.5A in the first direction. From the locations shown in FIG. 25 to locations shown in FIG. 26, the n coils 3 move 0.25A in the first direction.

From the locations shown in FIG. 19 to the locations shown in FIG. 26, the n coils 3 move 3A in the first direction. The first coil 31 passes over two groups of magnet units 4, and 3A=2k. For example, a distance A between center lines of adjacent coils 3 is 2.5 mm. A width k of one group of magnet unit 4 is 3.75 mm. A length of the first magnet 41 in the first direction is equal to a length of the second magnet 42 in the first direction, and the length of the first magnet 41 in the first direction is 0.5k=0.75A=1.875 mm.

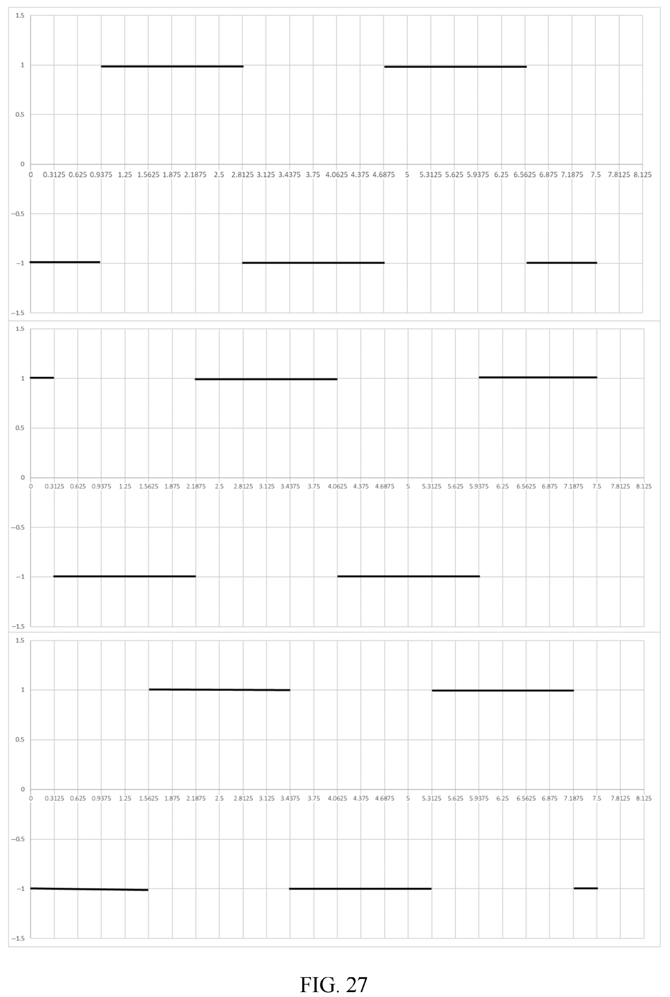

FIG. 27 is a diagram of an implementation of energization of the first coil 31, the second coil 32, and the third coil 33 in a moving process shown in FIG. 19 to FIG. 26. From top to bottom, the first coordinate system shows a current on the first coil 31, the second coordinate system shows a current on the second coil 32, and the third coordinate system shows a current on the third coil 33. A horizontal coordinate is a displacement of the coils 3 in the first direction. Positive or negative of a vertical coordinate represents a direction of a current. An absolute value of the vertical coordinate represents a magnitude of a current.

As shown in FIG. 27, a current on any coil 3 of the n coils 3 changes a direction every 0.5k. The first coil 31 is used as an example. At a horizontal coordinate of 0.9375 mm, the current on the first coil 31 changes from a negative value to a positive value, and the current on the first coil 31 reverses a direction. At a horizontal coordinate of 2.8125 mm, the current on the first coil 31 changes from a positive value to a negative value, and the current on the first coil 31 reverses a direction again. A distance between two direction reversals is 1.875 mm=0.5k.

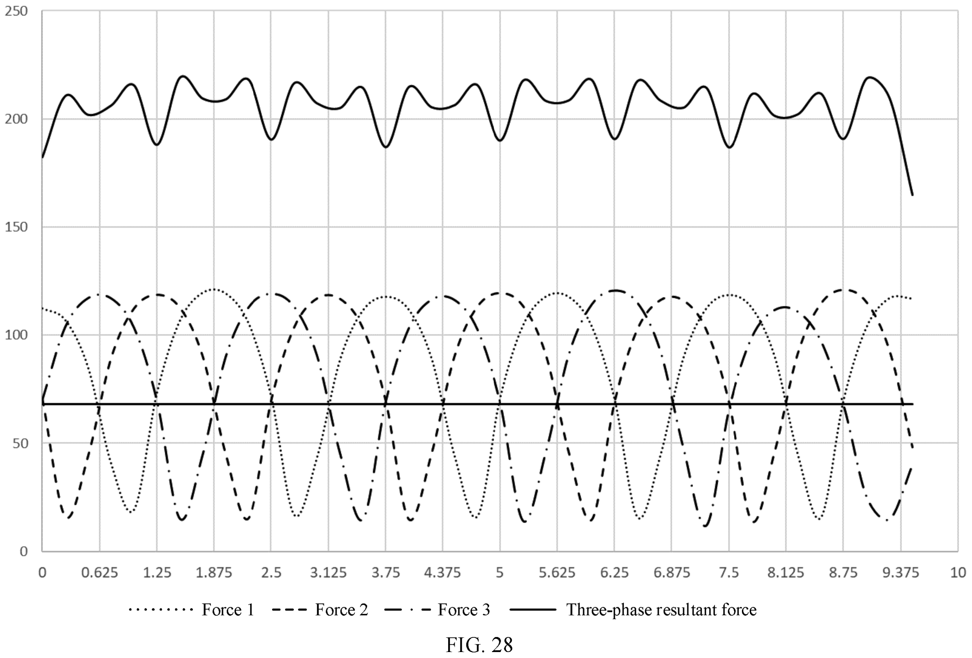

FIG. 28 is a diagram of an implementation of a relationship between displacements and forces of the n coils 3 in the energization manner shown in FIG. 27. In FIG. 28, different types of lines are used to distinguish between an ampere force (force 1) on the first coil 31, an ampere force (force 2) on the second coil 32, an ampere force (force 3) on the third coil 33, and a resultant force (three-phase resultant force) of the three forces. A location of the first coil shown in FIG. 19 corresponds to a horizontal coordinate 0 mm in FIG. 28.

As shown in FIG. 28, after energization, the ampere force on the first coil 31 periodically changes with the displacement, the ampere force on the second coil 32 periodically changes with the displacement, and the ampere force on the third coil 33 periodically changes with the displacement. The first coil 31 is used as an example. In a process of moving in the first direction, a change period X of the ampere force on the first coil 31 is 1.875 mm=0.5k.

As shown in FIG. 27 and FIG. 28, a phase difference of currents applied to the n coils 3 is 360°/n. For example, in the first coil 31, the second coil 32, and the third coil 33, a phase difference of currents applied to two coils is 360°/3=120°. 360° may be a displacement X (X is 1.875) required for a force on the coil 3 to undergo one period. For example, in FIG. 27, the phase difference of the currents on the first coil 31 and the third coil 33 is 0.625 mm. A phase difference of the second coil 32 and the third coil 33 is 0.625 mm.

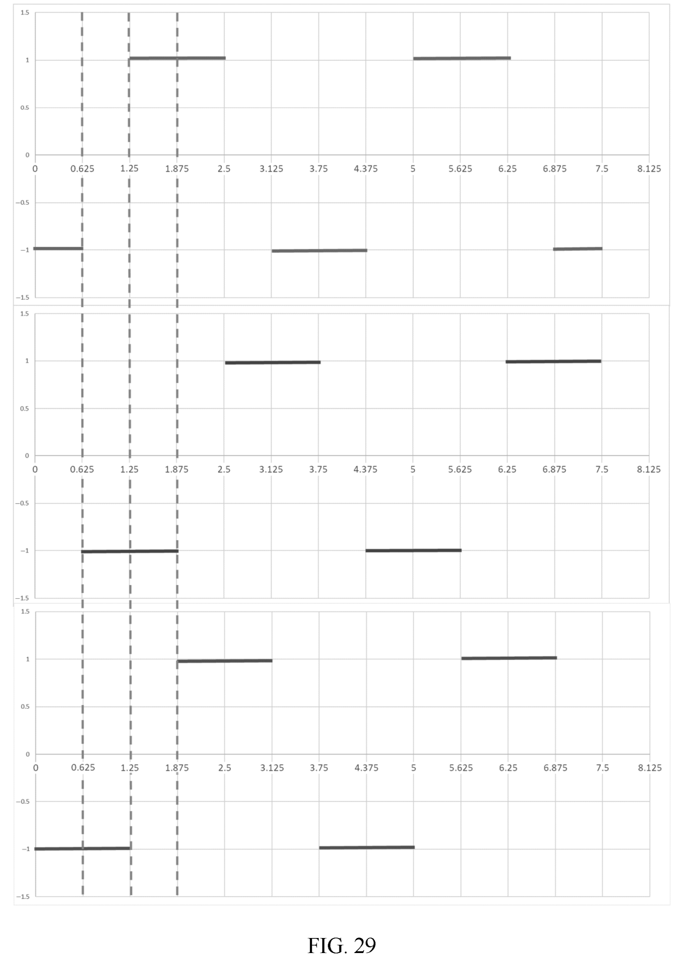

FIG. 29 is a diagram of another implementation of energization of the first coil 31, the second coil 32, and the third coil 33 in the moving process shown in FIG. 19 to FIG. 26.

As shown in FIG. 28 and FIG. 29, the n coils 3 include a first-type coil and a second-type coil. The first-type coil is a coil with lowest magnetic field strength in the n coils 3 at a moment at a location in which the n coils (3) are located. The second-type coil is a coil other than the first-type coil in the n coils 3. The first-type coil is de-energized, and the second-type coil is energized. Magnetic field strength at a location of the second-type coil is greater than magnetic field strength at a location of the first-type coil. It may be understood that, when magnitudes of the currents applied to the n coils 3 remain unchanged, a coil 3 located at a location with larger magnetic field strength is subjected to a larger force. A second-type coil that is subjected to a larger force is selected to be energized for working, and a first-type coil with lower working efficiency is de-energized. This helps reduce power consumption of the motor 10.

It may be understood that, when the n coils 3 move in the first direction, there is a coil with lowest magnetic field strength at any moment in the n coils 3. The coil is not a fixed coil, and is determined based on locations of the n coils.

For example, the n coils 3 include the first coil 31, the second coil 32, and the third coil 33. As shown in FIG. 28, in a range in which a horizontal coordinate is greater than 0 mm and less than 0.625 mm, the ampere force on the second coil 32 in FIG. 28 is less than the ampere force on the first coil 31, and the ampere force on the second coil 32 is less than the ampere force on the third coil 33. It can be learned that magnetic field strength at locations of the first coil 31 and the third coil 33 is greater than magnetic field strength at a location of the second coil 32. The second coil 32 is a first-type coil. The first coil 31 and the third coil 33 are second-type coils. The second coil 32 may be de-energized in the range in which a horizontal coordinate is greater than 0 mm and less than 0.625 mm.

When two of the first coil 31, the second coil 32, and the third coil 33 are first-type coils, and the other one is a second-type coil. In one force period, a ratio of an energized displacement to a de-energized displacement of each coil 3 is 2:1. For example, a ratio of a displacement of the first coil 31 in the first direction during energization to that during de-energization is 2:1. For example, a displacement range from 0 mm to 1.875 mm is a force period of the first coil 31. The first coil 31 is energized in a displacement from 0 mm to 0.625 mm. The first coil 31 is de-energized in a displacement from 0.625 mm to 1.25 mm. The first coil 31 is energized in a displacement from 1.25 mm to 1.875 mm. The displacement of the first coil 31 during energization is 1.25 mm, the displacement of the first coil 31 during de-energization is 0.625 mm, and 1.25 mm:0.625 mm is 2:1.

A ratio of a displacement of the second coil 32 in the first direction during energization to that during de-energization is 2:1; and/or a ratio of a displacement of the third coil 33 in the first direction during energization to that during de-energization is 2:1.

In some implementations, a phase difference of the currents applied to the n coils 3 is 360°/n. For example, when one of the n coils 3 is de-energized, and other coils 3 are energized, a phase difference of currents applied to two of the first coil 31, the second coil 32, and the third coil 33 satisfies 360°/3=120°. 360° may be a displacement X (X is 1.875) required for a force on the coil 3 to undergo one period. A phase difference △T of the currents applied to the first coil 31, the second coil 32, and the third coil 33 may be X/3=1.875 mm/3=0.625 mm. For example, a phase difference of currents on the first coil 31 and the third coil 33 is 0.625 mm. A phase difference of the second coil 32 and the third coil 33 is 0.625 mm.

In another implementation, at any location, any one of the first coil 31, the second coil 32, and the third coil 33 may be energized, and the other two coils are de-energized.

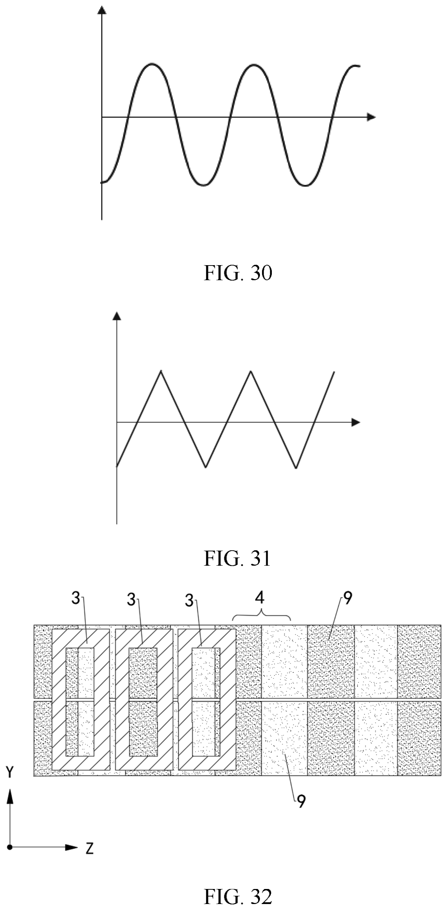

FIG. 30 is a diagram of another implementation of a current applied to the coil 3. FIG. 31 is a diagram of still another implementation of a current applied to the coil 3.

It may be understood that, in the foregoing embodiment, a square current is used as an example of a current of the coil 3, and the square current means that a magnitude of the current does not change, and a direction periodically changes. In another implementation, the current of the coil 3 may alternatively be a sinusoidal current (as shown in FIG. 30), a triangular-wave current (as shown in FIG. 31), or the like.

FIG. 32 is an assembly diagram of another implementation of the coils 3 and the magnet units 4 shown in FIG. 14.

As shown in FIG. 32, m magnet units 4 form one magnet array 9, the motor 10 may include a plurality of magnet arrays 9, and the plurality of magnet arrays 9 may be arranged in the second direction. FIG. 32 shows two magnet arrays 9. In the second direction, a length of the coil 3 is greater than a length of a magnet.

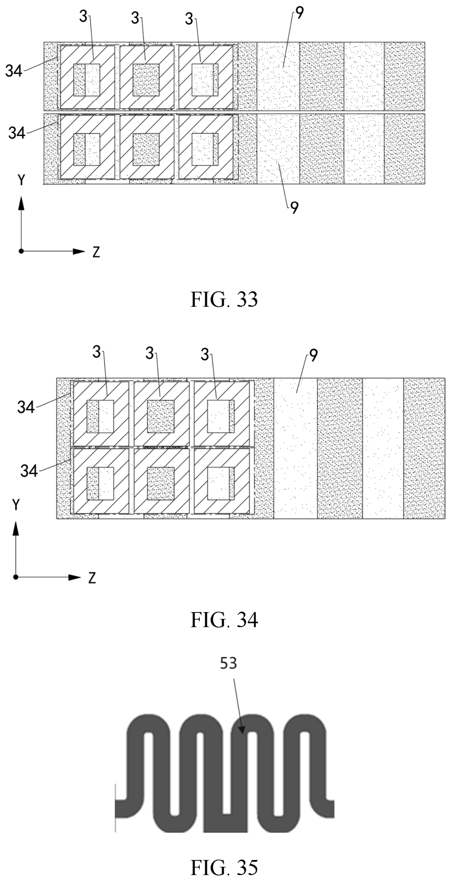

FIG. 33 is an assembly diagram of still another implementation of the coils 3 and the magnet units 4 shown in FIG. 14.

As shown in FIG. 33, the motor 10 may include a plurality of magnet arrays 9, and the plurality of magnet arrays 9 may be arranged in the second direction. FIG. 32 shows two magnet arrays 9. The N coils 3 form a coil group 34 in the first direction. The motor 10 may include a plurality of coil groups 34. The plurality of coil groups 34 are arranged in the second direction. FIG. 32 shows two coil groups 34. The two coil groups 34 and the two magnet arrays 9 are disposed opposite to each other in one-to-one correspondence in the second direction.

FIG. 34 is an assembly diagram of yet another implementation of the coils 3 and the magnet units 4 shown in FIG. 14.

As shown in FIG. 34, the n coils 3 form one coil group 34, and the motor 10 may include a plurality of coil groups 34. The plurality of coil groups 34 are arranged in the second direction. FIG. 32 shows two coil groups 34. The two coil groups 34 and the magnet array 9 are disposed opposite to each other.

It may be understood that the motor 10 further includes a plurality of magnet arrays 9 and/or a plurality of coil groups 34. A specific quantity and a correspondence may be designed based on a requirement.

The following describes several implementations of the electrical connector 5 with reference to the accompanying drawings.

As shown in FIG. 13, one end of the electrical connector 5 may be fastened to the base 1 and electrically connected to the first circuit board 6, and the other end may be fastened to the carrier 2 and electrically connected to the second circuit board 7. The electrical connector 5 may be electrically connected to the coils 3 and the TMR sensor 83 through the second circuit board 7. In the following, an end that is of the electrical connector 5 and that is electrically connected to the first circuit board 6 is referred to as a first end 51, and an end that is of the electrical connector 5 and that is electrically connected to the second circuit board 7 is referred to as a second end 52.

The electrical connector 5 may have a deformation capability. When the n coils 3 drive the carrier 2 to move in the first direction, the electrical connector 5 may deform, so that the coils 3 can be energized in a moving process.

In some implementations, the first end 51 of the electrical connector 5 may be fastened to the second side wall 13 of the base 1. In another implementation, the first end 51 of the electrical connector 5 may alternatively be fastened to the first side wall 12 of the base 1. Alternatively, the first end 51 of the electrical connector 5 may be partially located between the second bearing part and the third bearing part, electrically connected to the first circuit board 6, and fastened to the bottom plate 11 of the base 1.

In some implementations, the first end 51 of the electrical connector 5 may be electrically connected to the first circuit board 6 by tin soldering. In another implementation, the first end 51 of the electrical connector 5 may alternatively be electrically connected to the first circuit board 6 by ball grid array (Ball Grid Array, BGA) soldering.

For example, the second end 52 of the electrical connector 5 may be fastened to the back surface 25 of the carrier 2. In another implementation, the second end 52 of the electrical connector 5 may alternatively be fastened to the first side surface 23 or the second side surface 24 of the carrier 2. It may be understood that, when the second end 52 of the electrical connector 5 is fastened to the first side surface 23 or the second side surface 24 of the carrier 2, a location of the second circuit board 7 may be correspondingly adjusted.

In some implementations, the second end 52 of the electrical connector 5 may be electrically connected to the second circuit board 7 by tin soldering. In another implementation, the second end 52 of the electrical connector 5 may alternatively be electrically connected to the second circuit board 7 by BGA soldering.

For example, the electrical connector 5 may further include an extension part 53. The extension part 53 is connected between the first end 51 and the second end 52, and is electrically connected between the first end and the second end 52. The extension part 53 may be disposed opposite to the back surface 25 of the carrier 2. A length of the extension part 53 may be greater than a distance between the first end 51 and the second end 52. The extension part 53 may extend a length of the electrical connector 5 and reduce a K value of the electrical connector 5. As shown in FIG. 13 and FIG. 14, when the coils 3 drive the carrier 2 to move in the first direction, the extension part 53 may be stretched and deformed. This avoids a case in which because the electrical connector 5 falls off from the carrier 2 due to an excessively long moving path of the carrier 2, a power outage between the electrical connector and a second circuit board 7 is caused, the coils 3 are de-energized, and working of the motor 10 is affected. It may be understood that, by disposing the extension part 53, the K value of the electrical connector 5 can be reduced, so that reliability of an electrical connection between the electrical connector 5 and the second circuit board 7 is good.

In some implementations, the K value of the electrical connector 5 is less than 10 millinewtons per millimeter (millinewton Per millimeter, mN/mm). It may be understood that the K value of the electrical connector 5 is set to a small range, so that when the carrier 2 moves in the first direction, the electrical connector 5 causes small obstruction to moving of the carrier 2, and power consumption of the motor 10 is small.

FIG. 35 is a diagram of a structure of another implementation of the electrical connector 5 shown in FIG. 13.

In some implementations, the extension part 53 may be a spiral structure (as shown in FIG. 13) or a zigzag structure (as shown in FIG. 35). The spiral structure or the zigzag structure may extend the length of the extension part 53 and reduce the K value of the electrical connector 5. A shape of the extension part 53 may be designed based on an actual requirement. This is not limited in this application.

In some implementations, the zigzag structure of the extension part 53 may include but is not limited to: consecutive "S" structures, consecutive "V" structures, consecutive "M" structures, consecutive "N" structures, consecutive "W" structures, and the like.

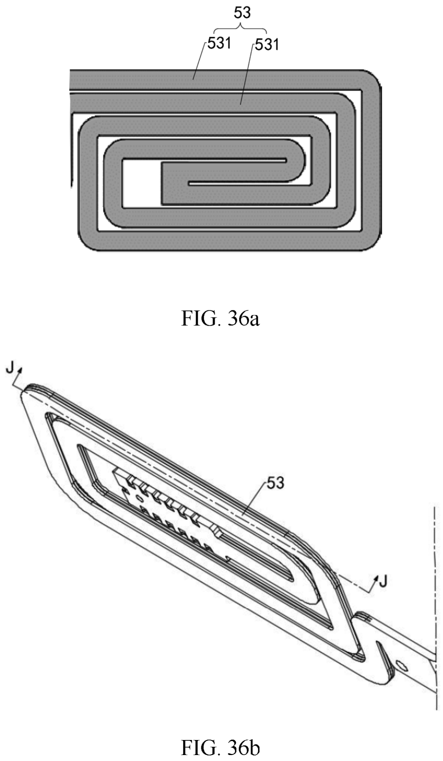

FIG. 36a is a diagram of a structure of still another implementation of the electrical connector 5 shown in FIG. 13.

In some implementations, the extension part 53 may be a single-line structure shown in FIG. 13, or may be a multi-line structure shown in FIG. 36a. As shown in FIG. 36a, the extension part 53 may include a plurality of signal transmission structures 531, and the plurality of signal transmission structures 531 are spaced apart. It may be understood that the plurality of signal transmission structures included in the extension part 53 are not limited to two signal transmission structures shown in FIG. 36a, or may be more than two signal transmission structures. This is not limited in this application.

In some implementations, the extension part 53 may be a trace suspension assembly (trace suspension assembly, TSA). One end of the trace suspension assembly is fastened to the base 1, and is electrically connected to the first circuit board 6, and the other end is fastened to the carrier 2 and is electrically connected to the coils 3. The trace suspension assembly is elastic. In another implementation, the extension part 53 may alternatively be a spring or a flexible circuit board.

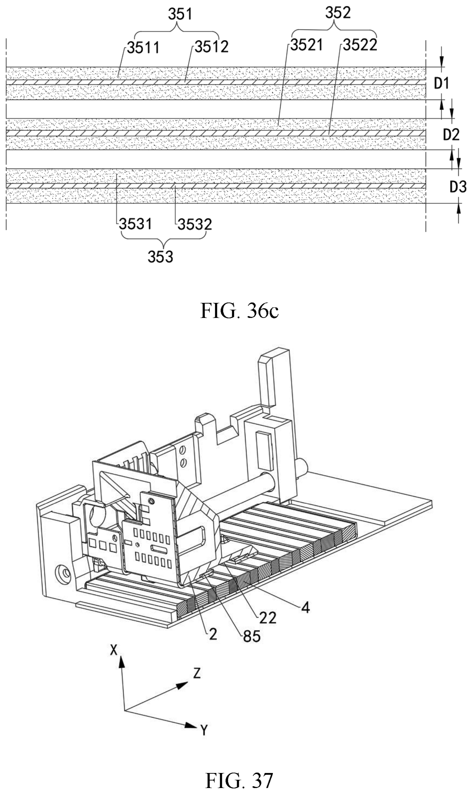

FIG. 36b is a diagram of a partial structure of yet another implementation of the electrical connector 5 shown in FIG. 13. FIG. 36c is a partial sectional view of an implementation of the extension part 53 shown in FIG. 36b along a section line J-J.

As shown in FIG. 36b and FIG. 36c, in a thickness direction of the extension part 53, the extension part 53 may be disposed in a plurality of layers, and may include a plurality of layer structures that are spaced apart. For example, the extension part 53 may include a first layer 351, a second layer 352, and a third layer 353. The first layer 351, the second layer 352, and the third layer 353 may be spaced apart in the thickness direction of the extension part 53.

For example, the first layer 351 may include a first insulation layer 3511 and a first trace 3512. The first trace 3512 may be embedded in the first insulation layer 3511. The second layer 352 may include a second insulation layer 3521 and a second trace 3522. The second trace 3522 may be embedded in the second insulation layer 3521. The third layer 353 may include a third insulation layer 3531 and a third trace 3532. The third trace 3532 may be embedded in the third insulation layer 3531. The first trace 3512, the second trace 3522, and the third trace 3532 are configured to transmit an electrical signal. For example, the first trace 3512, the second trace 3522, and the third trace 3532 may be configured to supply power to the coils 3 (as shown in FIG. 4) and the TMR sensor 83 (as shown in FIG. 4) and transmit an electrical signal. The first insulation layer 3511 is used to provide insulation protection for the first trace 3512. The second insulation layer 3521 is used to provide insulation protection for the second trace 3522. The third insulation layer 3531 is used to provide insulation protection for the third trace 3532.

For example, the first insulation layer 3511 may be made of an organic insulation material such as polyimide (Polyimide, PI). The first trace 3512 may be made of a metal conductive material such as copper. It may be understood that, for a manner of disposing the second insulation layer 3521 and the second trace 3522, refer to a manner of disposing the first insulation layer 3511 and the first trace 3512. For the third insulation layer 3531 and the third trace 3532, refer to the manner of disposing the first insulation layer 3511 and the first trace 3512. Details are not described herein.

For example, a quantity of first traces 3512 included in the first layer 351, a quantity of second traces 3522 included in the second layer 352, and a quantity of third traces 3532 included in the third layer 353 may be equal or may not be equal, and a quantity of traces at each layer may be set according to a requirement.

For example, a formula for calculating the K value is as follows:

$$K = \frac{EWT^3}{4L^3}$$

where E is a constant, W is a width, T is a thickness, and L is a length.

It may be understood that when the length and the width remain unchanged, the K value is proportional to a cube of the thickness.

For example, the thickness of the extension part 53 before layering may be 4.5 mm. After layering, a thickness D1 of the first layer 351 may be 1.7 mm, a thickness D2 of the second layer 352 may be 1.7 mm, and a thickness D3 of the third layer 353 may be 1.7 mm. A total thickness of the extension part 53 after layering is slightly greater than the thickness before layering, to ensure reliable insulation protection of the insulation layers for the traces.

For example, before the extension part 53 is layered, $K=a(4.5)^3=91.125a$, and after the extension part 53 is layered, $K=K1+K1+K3=a(1.7)^3+a(1.7)^3+a(1.7)^3=14.739a$. Apparently, after the extension part 53 is layered, although the sum of the thickness of the first layer 351, the thickness of the second layer 352, and the thickness of the third layer 353 of the extension part 53 is slightly greater than the thickness of the extension part 53 before the layering, the K value of the extension part 53 after the layering obviously decreases.

$$a = \frac{EW}{4L^3}$$

It may be understood that, compared with a solution in which the first layer 351, the second layer 352, and the third layer 353 are connected, dividing the extension part 53 into a plurality of layers that are spaced apart can significantly reduce the K value of the electrical connector 5. This helps reduce obstruction of the electrical connector 5 on moving of the carrier 2 when the carrier 2 moves in the first direction, and helps reduce power consumption of the motor 10.

For example, the K value of the electrical connector 5 may be 0.1 mN/mm, 0.2 mN/mm, 0.5 mN/mm, 0.8 mN/mm, 1.2 mN/mm, 1.5 mN/mm, or 2 mN/mm.

In another implementation, the extension part 53 may alternatively be disposed in two layers, or more than three layers. This is not limited to the three layers shown in FIG. 36b.

In another implementation, in a length direction, the extension part 53 may be partially layered and partially non-layered. For example, a connection structure (not shown in the figure) may be disposed on the extension part 53. A part of the connection structure may be fastened between the first layer 351 and the second layer 352, and a part of the connection structure may be fastened between the second layer 352 and the third layer 353.

FIG. 37 is a partial sectional view of an implementation of the structure shown in FIG. 13 along a section line E-E.

As shown in FIG. 37, the magnetic sheet 85 made of a metal material may be fastened to the bottom surface 22 of the carrier 2, and is disposed opposite to the magnet units 4. In this way, in the X-axis direction, an attractive force exists between the magnetic sheet 85 and the magnet units 4, and can limit the carrier 2 in the X-axis direction.

In some implementations, the magnetic sheet 85 may be in a disc or annular structure. A thickness direction of the magnetic sheet 85 is set to be parallel to the X-axis direction. This can avoid an excessively large interference force in a non-acting direction between the magnetic sheet 85 and the magnet units 4. The acting direction is a direction in which the magnetic sheet 85 faces the magnet units 4.

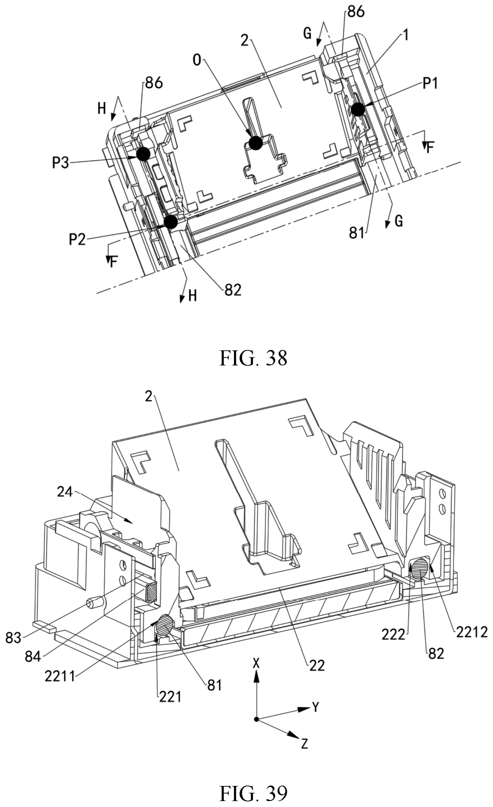

FIG. 38 is a diagram of a partial structure of an implementation of the motor 10 shown in FIG. 3 from another angle. FIG. 39 is a sectional view of an implementation of the motor 10 shown in FIG. 38 along a section line F-F.

As shown in FIG. 38 and FIG. 39, the carrier 2 is slidably connected to the first guide rod 81 and the second guide rod 82, and a length direction of the first guide rod 81 and a length direction of the second guide rod 82 may be parallel to the first direction. It may be understood that the length direction of the first guide rod 81 and the length direction of the second guide rod 82 are set to be parallel to the first direction, so that when the carrier 2 moves in the first direction, the first guide rod 81 and the second guide rod 82 can provide support, and can further guide a moving direction of the carrier 2, to avoid misalignment of the carrier 2 in a moving process and ensure that the carrier 2 moves quickly and stably.

It may be understood that, due to an assembly tolerance or production precision, in an actual product, an included angle within 10° is allowed between the length direction of the first guide rod 81 and the first direction.

For example, a first sliding groove 221 and a second sliding groove 222 may be disposed on the bottom surface 22 of the carrier 2. The first sliding groove 221 and the second sliding groove 222 are spaced apart. The first guide rod 81 is slidably connected to the first sliding groove 221, and the second guide rod 82 is slidably connected to the second sliding groove 222. The first sliding groove 221 and the second sliding groove 222 may be used as positioning structures of the first guide rod 81 and the second guide rod 82, to facilitate quick positioning and mounting between the carrier 2 and the first guide rod 81 and the second guide rod 82.

For example, the first sliding groove 221 may be located on the first bump 28. The second sliding groove 222 may be located on the second bump 29. The first bump 28 is slidably connected to the base 1 through the first guide rod 81. The second bump 29 is slidably connected to the base 1 through the second guide rod 82.

In some implementations, the first sliding groove 221 may include a "V"-shaped structure 2211, and the first guide rod 81 may be slidably connected to the "V"-shaped structure 2211. The first guide rod 81 and the "V"-shaped structure 2211 have two contact points in the Y-axis direction. In a process of assembling the carrier 2 with the first guide rod 81 and the second guide rod 82, the carrier 2 can be quickly positioned in the Y-axis direction. When an actual product size of the first guide rod 81 is slightly greater than a designed size due to a tolerance, the first guide rod 81 can still be assembled in the "V"-shaped structure 2211. The "V"-shaped structure 2211 may be further used to accommodate a tolerance.

In some implementations, the second sliding groove 222 includes a "U"-shaped structure 2212, and the second guide rod 82 is slidably connected to the "U"-shaped structure 2212. In some implementations, in the Y-axis direction, a groove width of the "U"-shaped structure 2212 may be greater than a width of the second guide rod 82. In this way, the carrier 2 can be allowed to have a specific production error, and it is ensured that when a size of the carrier 2 slightly increases or decreases due to the production error, the carrier 2 can be successfully slidably connected to the first guide rod 81 and the second guide rod 82. Setting the "U" structure 2212 can improve an error tolerance rate, and can save production costs.

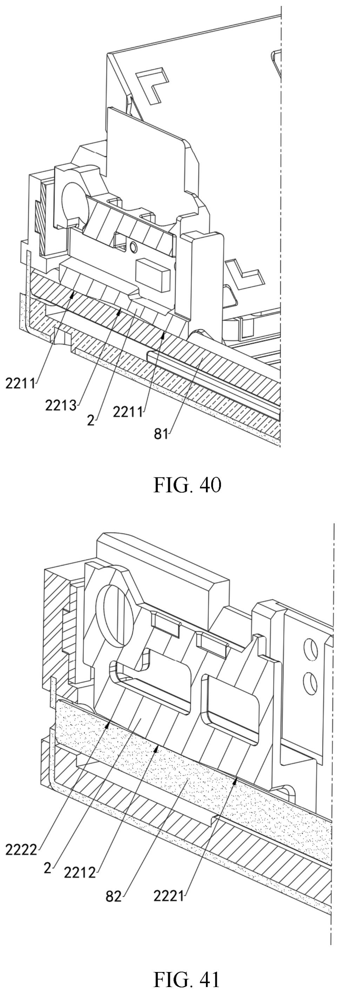

FIG. 40 is a sectional view of an implementation of the motor 10 shown in FIG. 38 along a section line G-G.

As shown in FIG. 38 to FIG. 40, there are two "V"-shaped structures 2211, and locations of the "V"-shaped structures 2211 are respectively P1 and P2. For example, a middle part of the first sliding groove 221 may be recessed to form a first avoidance groove 2213, and the first guide rod 81 may be spaced apart from a wall surface of the first avoidance groove 2213, to form two "V"-shaped structures 2211 at two ends of the avoidance groove. It may be understood that, two ends of the first guide rod 81 are in contact with the "V"-shaped structure 2211 (as shown in FIG. 20), and other parts are not in contact with the first sliding groove 221, to avoid a problem that a moving process of the carrier 2 is not smooth and has poor stability because a contact area between the carrier 2 and the first guide rod 81 is excessively large and friction is excessively high, and avoid a problem that the carrier 2 has poor stability in a moving process because flatness of a contact plane between the carrier 2 and the first guide rod 81 is poor.

FIG. 41 is a sectional view of an implementation of the motor 10 shown in FIG. 38 along a section line H-H.

As shown in FIG. 38, FIG. 39, and FIG. 41, there is one "U"-shaped structure 2212, and a location of the "U"-shaped structure 2212 is P3. For example, two ends of the second sliding groove 222 may be recessed to form a second avoidance groove 2221 and a third avoidance groove 2222, and the second guide rod 82 may be spaced apart from a wall surface of the second avoidance groove 2221 and a wall surface of the third avoidance groove 2222. The second avoidance groove 2221 and the third avoidance groove 2222 may be located at two ends of the "U"-shaped structure 2212. It may be understood that, a middle part of the second guide rod 82 is in contact with the "U"-shaped structure 2212, and other parts are not in contact with the second sliding groove 222, to avoid a problem that a moving process of the carrier 2 is not smooth and has poor stability because a contact area between the carrier 2 and the second guide rod 82 is excessively large and friction is excessively high, and avoid a problem that the carrier 2 has poor stability in a moving process because flatness of a contact plane between the carrier 2 and the second guide rod 82 is poor.

As shown in FIG. 38, one "U"-shaped structure 2212 (at a location P1 in FIG. 38) and two "V"-shaped structures 2211 (at locations P2 and P3 in FIG. 38) may be sequentially connected to form a triangle. In other words, three connection locations between the carrier 2 and the first guide rod 81 and the second guide rod 82 are sequentially connected to form a triangle. A projection of a center O of the carrier 2 on a plane on which the triangle is located may coincide with the triangle. In this way, a three-point connection is formed between the carrier 2, the first guide rod 81, and the second guide rod 82, so that a shaking risk of the carrier 2 in the moving process can be reduced.

As shown in FIG. 38, the buffer member 86 is fastened to the base 1, the buffer member 86 and the carrier 2 are disposed opposite to each other in the first direction, and the buffer member 86 is flexible. In this way, when the carrier 2 moves in the first direction or collides with the base 1 in a reliability test, the buffer member 86 may absorb deformation impact energy, to reduce damage caused by collision impact to the carrier 2. A material of the buffer member 86 may be a material whose modulus is far less than that of the carrier 2, to protect the carrier 2 and a structure disposed on the carrier 2. For example, when the material of the carrier 2 is hard plastic, the material of the buffer member 86 may be a soft and deformable material such as rubber, silicone, Mylar sheet, or foam.

As shown in FIG. 39, the magnetic gating 84 may be fastened to the second side wall 13 of the base 1. The TMR sensor 83 may be fastened to the second side surface 24 of the carrier 2, and is disposed opposite to the magnetic gating 84. It may be understood that the TMR sensor 83 may cooperate with the magnetic gating 84, to measure a displacement of the carrier 2 when the carrier 2 moves in the first direction. In a moving process of the carrier 2, a moving displacement of the carrier 2 may be fed back to a controller (not shown in the figure) that controls the camera module, so that the controller can adjust a current of the carrier 2. The TMR sensor 83 has advantages of high precision, high sensitivity, low power consumption, small size, good temperature stability, and wide operating temperature range.

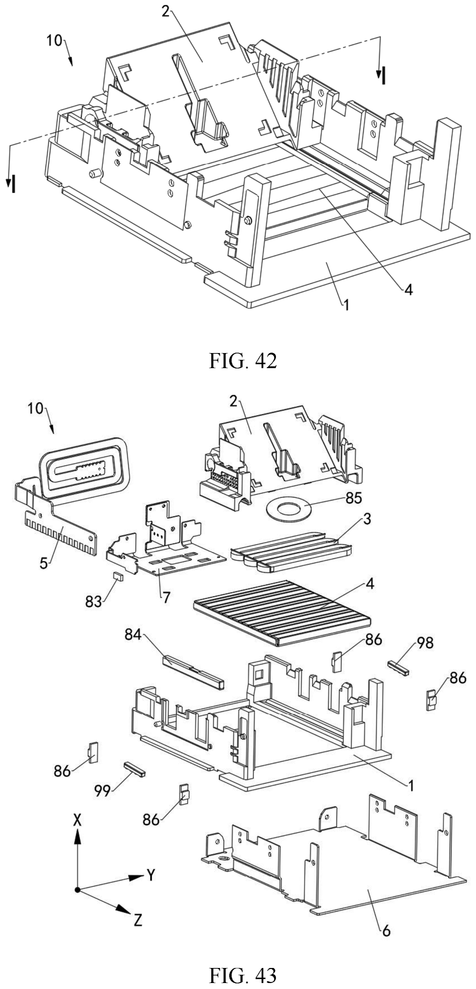

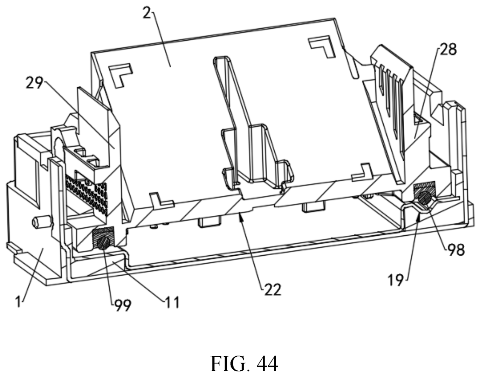

In some implementations, content that is the same as that in the foregoing embodiments is not described again. FIG. 42 is a diagram of a structure of another implementation of the motor 10 shown in FIG. 2. FIG. 43 is an exploded diagram of an implementation of the motor 10 shown in FIG. 41. FIG. 44 is a sectional view of an implementation of the motor 10 shown in FIG. 42 along a section line I-I.

As shown in FIG. 42 to FIG. 44, the motor 10 may include a base 1, a carrier 2, n coils 3, m groups of magnet units 4, an electrical connector 5, a first circuit board 6, a second circuit board 7, a first ball 98, a second ball 99, a tunnel magnetoresistance effect sensor 83, a magnetic gating 84, a magnetic sheet 85, and a buffer member 86. For a manner of disposing the n coils 3, the m groups of magnet units 4, the electrical connector 5, the first circuit board 6, the second circuit board 7, the tunnel magnetoresistance effect sensor 83, the magnetic gating 84, the magnetic sheet 85, and the buffer member 86, refer to the foregoing disposing manner of the motor 10. Details are not described herein again.

The first ball 98 and the second ball 99 are fastened to the bottom surface 22 of the carrier 2 and are spaced apart in the second direction. The second direction may intersect with the first direction. For example, the first ball 98 may be fastened to the first bump 28. The second ball 99 may be fastened to the second bump 29. The first ball 98 and the second ball 99 are slidably connected to the bottom plate 11 of the base 1. The carrier 2 may be slidably connected to the base 1 through a ball. It may be understood that, compared with a solution in which a guide rod is used to implement a sliding connection between the carrier 2 and the base 1, using the balls can reduce an area of a sliding connection, to help reduce friction resistance.

In some implementations, the coils 3 may be fastened to the bottom surface 22 of the carrier 2. The first ball 98 and the second ball 99 are respectively located on two sides of the coils 3, and are spaced apart from the coils 3. When being slidably connected to the base 1, the first ball 98 and the second ball 99 can support the carrier 2 on two sides of the coils 3.

In some implementations, a third sliding groove 19 may be disposed on the bottom plate 11 of the base 1. The first ball 98 is slidably connected to the third sliding groove 19. The first ball 98 and the third sliding groove 19 may be used as a concave-convex fit structure, and help positioning of the carrier 2 and the base 1 when the carrier 2 is mounted on the base 1.

In this application, several motors 10 used in the camera module 100 are described with reference to the accompanying drawings. The motor may include the base 1, the carrier 2, the n coils 3, and the m groups of magnet units 4. Either the magnet units 4 or the coils 3 are fastened to the base 1, and the others are fastened to the carrier 2. The carrier 2 is used to mount the first optical element 204, where n and m are integers greater than or equal to 2, and m is greater than n. The n coils 3 are arranged in the first direction, the m groups of magnet units 4 are arranged in the first direction, the magnet unit 4 includes at least two polarity directions opposite to each other, the at least two polarity directions intersect with the first direction, and the n coils 3 face the m groups of magnet units 4, to drive the carrier 2 to move relative to the base 1 in the first direction.

The distance A between center lines of two adjacent coils 3 in the first direction satisfies: $nA=jk$, where j is a positive integer, and k is a length of the magnet unit 4 in the first direction.

It may be understood that, after being energized, the coils 3 may move in the first direction under an action of a magnetic field of the m groups of magnet units 4, so that the coils 3 can drive the carrier 2 to move relative to the base 1 in the first direction. $nA=jk$ is set, and after the n coils 3 translate by nA in the first direction, magnetic field strength and directions of the n coils can be the same at locations before and after the n coils 3 move by nA. If magnitudes and directions of currents on the n coils 3 at the locations before and after the n coils 3 move may be set to be the same, magnitudes and directions of ampere forces on the n coils 3 may also be the same. In other words, an alternating current with a period of nA may be applied to the n coils 3, so that when the n coils 3 move in the first direction, under cooperation of the periodic alternating current and the magnetic field of the m groups of magnet units 4, the n coils 3 can continuously move in the first direction, and the carrier 2 can implement a long-stroke displacement relative to the base 1 in the first direction.

n and m are integers greater than or equal to 2, and m is greater than n. The m groups of magnet units 4 are arranged in the first direction, and a stroke of the motor 10 depends on a length of the m groups of magnet units 4 in the first direction. A plurality of groups of magnet units 4 are disposed, so that a long-stroke displacement of the carrier 2 in the first direction can be implemented. In addition, the plurality of coils 3 are subjected to a plurality of ampere forces in the magnetic field. Compared with a solution in which one coil is used, the plurality of coils 3 can drive a prism or a lens with a larger mass to move, or a quantity of coils 3 is increased when a load remains unchanged, so that a moving speed of the carrier 2 can be increased, to facilitate fast focusing of the camera module 100.

When the carrier 2 needs to drive the first optical element 204 to move in a direction of an optical axis of the camera module 100, the first direction may be set to a direction parallel to the optical axis. In this way, the coils 3 can drive the carrier 2 to move in the direction parallel to the optical axis of the camera module 100.

In another implementation, the n coils 3 may alternatively be fastened on the base 1, and the m groups of magnet units 4 may alternatively be fastened on the carrier 2.

It may be understood that embodiments of this application and features in embodiments may be combined with each other if there is no conflict, and any combination of features in different embodiments also falls within the protection scope of this application. In other words, the plurality of embodiments described above may be further randomly combined based on an actual requirement.

It may be understood that all the foregoing accompanying drawings are example illustrations of this application, and do not represent actual sizes of products. In addition, a size proportion relationship between the components in the accompanying drawings is not intended to limit an actual product in this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A motor (10), comprising a base (1), a carrier (2), n coils (3), and m groups of magnet units (4), wherein either the magnet units (4) or the coils (3) are fastened to the base (1), the others are fastened to the carrier (2), the carrier (2) is used to mount a first optical element (204), n and m are integers greater than or equal to 2, and m is greater than n;

the n coils (3) are arranged in a first direction, the m groups of magnet units (4) are arranged in the first direction, the magnet unit (4) comprises at least two polarity directions opposite to each other, the at least two polarity directions intersect with the first direction, and the n coils (3) face the m groups of magnet units (4), to drive the carrier (2) to move relative to the base (1) in the first direction; and
a distance A between center lines of two adjacent coils (3) in the first direction satisfies: nA=jk, wherein j is a positive integer, and k is a length of the magnet unit (4) in the first direction.

2. The motor (10) according to claim 1, wherein a length of the coil (3) in the first direction is greater than 0.5k and less than k.

3. The motor (10) according to claim 1 or 2, wherein a length of the m groups of magnet units (4) in the first direction is greater than or equal to 9000 micrometers.

4. The motor (10) according to any one of claims 1 to 3, wherein the magnet unit (4) comprises a first magnet (41) and a second magnet (42), the first magnet (41) and the second magnet (42) are arranged in the first direction, a polarity direction of the first magnet (41) is opposite to a polarity direction of the second magnet (42), both the polarity direction of the first magnet (41) and the polarity direction of the second magnet (42) intersect with the first direction, and a sum of a length of the first magnet (41) in the first direction and a length of the second magnet (42) in the first direction is k; or the magnet units (4) comprise a first magnet (41), a second magnet (42), and a third magnet (43), the first magnet (41), the second magnet (42), and the third magnet (43) are arranged in the first direction, the third magnet (43) is located between the first magnet (41) and the second magnet (42), a polarity direction of the first magnet (41) is opposite to a polarity direction of the second magnet (42), polarity directions of the first magnet (41), the second magnet (42), and the third magnet (43) are different from each other and all intersect with the first direction, and a sum of a length of the first magnet (41) in the first direction, a length of the second magnet (42) in the first direction, and a length of the third magnet (43) in the first direction is k.

5. The motor (10) according to claim 4, wherein the length of the first magnet (41) in the first direction is equal to the length of the second magnet (42) in the first direction.

6. The motor (10) according to any one of claims 1 to 5, wherein the n coils (3) comprise a first coil (31), a magnetic field direction of the first coil (31) at a first location is the same as a magnetic field direction of the first coil (31) at a second location, and magnetic field strength of the first coil (31) at the first location is the same as magnetic field strength of the first coil (31) at the second location; and a distance between the first location and the second location in the first direction is nA.

7. The motor (10) according to any one of claims 1 to 5, wherein the n coils (3) comprise a first coil (31), and a direction of a current changes when the first coil (31) moves a distance of 0.5k in the first direction.

8. The motor (10) according to any one of claims 1 to 7, wherein a phase difference of currents applied to the n coils (3) is 360°/n.

9. The motor (10) according to any one of claims 1 to 5, wherein the n coils (3) comprise a first-type coil and a second-type coil, the first-type coil is a coil with lowest magnetic field strength in the n coils (3) at a moment at a location in which the n coils (3) are located, and the second-type coil is a coil (3) other than the first-type coil in the n coils (3); and the first-type coil is de-energized, and the second-type coil is energized.

10. The motor (10) according to claim 9, wherein the n coils (3) comprise a first coil (31), a second coil (32), and a third coil (33), and the first coil (31), the second coil (32), and the third coil (33) are arranged in the first direction; and

a ratio of a displacement of the first coil (31) in the first direction during energization to that during de-energization is 2:1; and/or

a ratio of a displacement of the second coil (32) in the first direction during energization to that during de-energization is 2:1; and/or

a ratio of a displacement of the third coil (33) in the first direction during energization to that during de-energization is 2:1.

11. The motor (10) according to any one of claims 1 to 10, wherein the motor (10) further comprises an electrical connector (5), one end of the electrical connector (5) is fastened to the base (1), the other end is fastened to the carrier (2) and is electrically connected to the coils (3), and the electrical connector (5) has a deformation capability.

12. The motor (10) according to claim 11, wherein a K value of the electrical connector (5) is less than 10 mN/mm.

13. The motor (10) according to claim 11 or 12, wherein the electrical connector (5) comprises a spiral structure or a zigzag structure.

14. The motor (10) according to any one of claims 11 to 13, wherein the electrical connector (5) comprises a spring; or

the electrical connector (5) comprises a trace suspension assembly, one end of the trace suspension assembly is fastened to the base (1), the other end is fastened to the carrier (2) and is electrically connected to the coils (3), and the trace suspension assembly is elastic.

15. The motor (10) according to any one of claims 1 to 14, wherein the carrier (2) comprises a first side panel (26) and a second side panel (27), the first side panel (26) and the second side panel (27) are disposed at an included angle, the first optical element (204) is mounted on a surface that is of the first side panel (26) and that is away from the second side panel (27), the n coils (3) are fastened to a surface that is of the second side panel (27) and that is away from the first side panel (26), and the m groups of magnet units (4) are fastened to the base (1).

16. The motor (10) according to claim 15, wherein the carrier (2) further comprises a first bump (28) and a second bump (29), the first bump (28) and the second bump (29) are arranged in a second direction, the first side panel (26) and the second side panel (27) are connected between the first bump (28) and the second bump (29), and the first direction intersects with the second direction; and

the first bump (28) and the second bump (29) are slidably connected to the base (1) through guide rods.

17. The motor (10) according to any one of claims 1 to 15, wherein the motor (10) further comprises a first guide rod (81) and a second guide rod (82), the first guide rod (81) and the second guide rod (82) are fastened to the base (1) and are spaced apart in a second direction, the first guide rod (81) and the second guide rod (82) are respectively located on two sides of the coils (3) and are spaced apart from the coils (3), and the first direction intersects with the second direction; and

the carrier (2) is slidably connected to the first guide rod (81) and the second guide rod (82), and a length direction of the first guide rod (81) and a length direction of the second guide rod (82) are parallel to the first direction.

18. The motor (10) according to claim 17, wherein the base (1) comprises a bottom plate (11), a first bearing part (14), a second bearing part (15), a third bearing part (16), and a fourth bearing part (17), and the first bearing part (14), the second bearing part (15), the third bearing part (16), and the fourth bearing part (17) are fastened to a peripheral edge of the bottom plate (11);

the first bearing part (14) and the second bearing part (15) are disposed opposite to each other and spaced apart in the first direction, the third bearing part (16) and the fourth bearing part (17) are disposed opposite to each other and spaced apart in the first direction, the first bearing part (14) and the third bearing part (16) are disposed opposite to each other and spaced apart in the second direction, and the second bearing part (15) and the fourth bearing part (17) are disposed opposite to each other and spaced apart in the second direction; and

two ends of the first guide rod (81) are respectively fastened to the first bearing part (14) and the second bearing part (15), and two ends of the second guide rod (82) are respectively fastened to the third bearing part (16) and the fourth bearing part (17).

19. The motor (10) according to claim 17 or 18, wherein a bottom surface (22) of the carrier (2) is provided with a first sliding groove (221) and a second sliding groove (222), the first guide rod (81) is slidably connected to the first sliding groove (221), and the second guide rod (82) is slidably connected to the second sliding groove (222); and

the first sliding groove (221) comprises a "V"-shaped structure (2211), and the second sliding groove (222) comprises a "U"-shaped structure (2212).

20. The motor (10) according to claim 19, wherein there are two "V"-shaped structures (2211) and one "U"-shaped structure (2212); and

the two "V"-shaped structures (2211) and the "U"-shaped structure (2212) are sequentially connected to form a triangle, and a projection of a center of the carrier (2) on a plane on which the triangle is located coincides with the triangle.

21. The motor (10) according to any one of claims 1 to 15, wherein the motor (10) further comprises a first ball (98) and a second ball (99), the first ball (98) and the second ball (99) are fastened to the carrier (2) and spaced apart in a second direction, the first ball (98) and the second ball (99) are respectively located on two sides of the coils (3) and are spaced apart from the coils (3), and the first direction intersects with the second direction; and
the first ball (98) and the second ball (99) are slidably connected to the base (1).

22. The motor (10) according to any one of claims 1 to 21, wherein the motor (10) further comprises a tunnel magnetoresistance effect sensor (83) and a magnetic grating (84), the tunnel magnetoresistance effect sensor (83) is fastened to the carrier (2) and is spaced apart from the coils (3), the magnetic gating (84) is fastened to the base (1) and is spaced apart from the magnet units (4), and the tunnel magnetoresistance effect sensor (83) and the magnetic gating (84) are disposed opposite to each other.

23. The motor (10) according to any one of claims 1 to 22, wherein the motor (10) further comprises a magnetic sheet (85) made of a metal material, the magnetic sheet (85) is fastened to the carrier (2) or the base, and is spaced apart from the coils (3), and the magnetic sheet (85) is disposed opposite to the magnet units (4).

24. The motor (10) according to any one of claims 1 to 23, wherein the motor (10) further comprises a buffer member (86), the buffer member (86) is fastened to the base (1), the buffer member (86) and the carrier (2) are disposed opposite to each other in the first direction, and the buffer member (86) is flexible.

25. A camera module (100), comprising a first optical element (204), a photosensitive element (302), and the motor (10) according to any one of claims 1 to 24, wherein the photosensitive element (302) is located on a light-exiting side of the first optical element (204), and the first optical element (204) is mounted on the carrier (2) of the motor (10).

26. The camera module (100) according to claim 25, wherein the first optical element (204) is a prism, the camera module (100) may further comprise a second optical element (203), and the second optical element (203) may be located on the light-exiting side of the first optical element (204) and located on a light-incident side of the photosensitive element (302).

27. The camera module (100) according to claim 26, wherein the camera module (100) may further comprise a third optical element (201) and a fourth optical element (202), the third optical element (201) is located on a light-incident side of the prism, the fourth optical element (202) is located on the light-incident side of the prism, and the third optical element (201) and the fourth optical element (202) are spaced apart in the first direction; and
the carrier (2) of the motor (10) drives the prism to move in the first direction, the prism is opposite to the third optical element (201) at a first location, and the prism is opposite to the fourth optical element (202) at a second location.

28. An electronic device (1000), comprising a housing (200) and the camera module (100) according to any one of claims 25 to 27, wherein the camera module (100) is mounted in the housing (200).

FIG. 1

FIG. 2

FIG. 3

FIG. 4

FIG. 5

FIG. 6

FIG. 7

FIG. 8a

FIG. 8b

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24

FIG. 25

FIG. 26

FIG. 27

FIG. 28

FIG. 29

FIG. 30

FIG. 31

FIG. 32

FIG. 33

FIG. 34

FIG. 35

FIG. 36a

FIG. 36b

351 352
3511 3512 3521 3522

D1

D2

D3

3531 3532

353

FIG. 36c

2 85 22 4

X

Z

Y

FIG. 37

EP 4 723 449 A1

FIG. 38

FIG. 39

47

FIG. 40

FIG. 41

FIG. 42

FIG. 43

FIG. 44

## INTERNATIONAL SEARCH REPORT

| International application No. |
|---|
| **PCT/CN2025/076218** |

| A. | CLASSIFICATION OF SUBJECT MATTER |
|---|---|

H02K33/18(2006.01)i;  G03B30/00(2021.01)i;  H02K41/02(2006.01)i

According to International Patent Classification (IPC) or to both national classification and IPC

| B. | FIELDS SEARCHED |
|---|---|

Minimum documentation searched (classification system followed by classification symbols)

IPC:H02K,G03B

Documentation searched other than minimum documentation to the extent that such documents are included in the fields searched

Electronic data base consulted during the international search (name of data base and, where practicable, search terms used)

CNTXT, ENTXTC, VEN, CNKI, IEEE: 摄像, 相机, 长焦, 微距, 永磁, 磁石, 磁体, 磁铁, 动子, 线圈, 音圈, 永磁, 载体, camera, carrier, magnet?, coil?, zoom

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | CN 113848627 A (LIAONING ZHONGLAN PHOTOELECTRIC TECHNOLOGY CO., LTD.) 28 December 2021 (2021-12-28) <br> description, paragraphs 20-28, and figures 1-8 | 1-28 |
| Y | JP H0433565 A (HITACHI METALS LTD.) 04 February 1992 (1992-02-04) <br> description, column 14, line 1 to column 20, line 4, and figures 1-8 | 1-28 |
| Y | CN 112596193 A (BEIJING KELIERFU TECHNOLOGY CO., LTD.) 02 April 2021 (2021-04-02) <br> description, paragraphs 89-126, and figures 1-42 | 17-20 |
| A | JP 2004343853 A (SONY CORP.) 02 December 2004 (2004-12-02) <br> entire document | 1-28 |
| A | JP 2019152785 A (CANON K.K.) 12 September 2019 (2019-09-12) <br> entire document | 1-28 |
| A | US 2021356841 A1 (PANASONIC INTELLECTUAL PROPERTY MANAGEMENT CO., LTD.) 18 November 2021 (2021-11-18) <br> entire document | 1-28 |

☑ Further documents are listed in the continuation of Box C.          ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 May 2025** | **13 May 2025** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

EP 4 723 449 A1

**INTERNATIONAL SEARCH REPORT**

International application No.

**PCT/CN2025/076218**

**C.    DOCUMENTS CONSIDERED TO BE RELEVANT**

| Category* | Citation of document, with indication, where appropriate, of the relevant passages | Relevant to claim No. |
|---|---|---|
| A | CN 117651902 A (LG INNOTEK CO., LTD.) 05 March 2024 (2024-03-05) entire document | 1-28 |

Form PCT/ISA/210 (second sheet) (July 2022)

## INTERNATIONAL SEARCH REPORT
### Information on patent family members

International application No.

**PCT/CN2025/076218**

| Patent document cited in search report | | | Publication date (day/month/year) | Patent family member(s) | | | Publication date (day/month/year) |
|---|---|---|---|---|---|---|---|
| CN | 113848627 | A | 28 December 2021 | None | | | |
| JP | H0433565 | A | 04 February 1992 | None | | | |
| CN | 112596193 | A | 02 April 2021 | None | | | |
| JP | 2004343853 | A | 02 December 2004 | None | | | |
| JP | 2019152785 | A | 12 September 2019 | US | 2019068042 | A1 | 28 February 2019 |
| | | | | CN | 109426047 | A | 05 March 2019 |
| | | | | JP | 2019040130 | A | 14 March 2019 |
| US | 2021356841 | A1 | 18 November 2021 | WO | 2019234980 | A1 | 12 December 2019 |
| | | | | JP | 2024144647 | A | 11 October 2024 |
| | | | | EP | 3806300 | A1 | 14 April 2021 |
| | | | | JP | 2023029428 | A | 03 March 2023 |
| | | | | JP | 2019213433 | A | 12 December 2019 |
| | | | | EP | 3955440 | A1 | 16 February 2022 |
| CN | 117651902 | A | 05 March 2024 | KR | 20230001389 | A | 04 January 2023 |
| | | | | KR | 20230016036 | A | 31 January 2023 |
| | | | | KR | 20230022602 | A | 16 February 2023 |
| | | | | WO | 2023277540 | A1 | 05 January 2023 |
| | | | | US | 2024302625 | A1 | 12 September 2024 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410177064
- CN 202410223784
- CN 202410417502